# EUROPEAN PATENT APPLICATION

(11) **EP 4 447 561 A1**
(43) Date of publication of application: **16.10.2024**
(21) Application number: 23745994.6
(22) Date of filing: 13.01.2023
(51) Int. Cl.: H04W 48/18

(54) **COMMUNICATION METHOD AND APPARATUS**

(30) Priority: 29.01.2022 CN 202210112910
(71) Applicant: Huawei Technologies Co., Ltd., Shenzhen, Guangdong 518129 (CN)
(72) Inventor: WU, Shaoyun, Shenzhen, Guangdong 518129 (CN); XING, Weijun, Shenzhen, Guangdong 518129 (CN)
(74) Representative: Gill Jennings & Every LLP
(86) International application number: PCT/CN2023/072021
(87) International publication number: WO 2023/143111

(57) **Abstract**

This application discloses a communication method and apparatus. The method includes: An access management entity receives a first connection request message, where the first connection request message is used to request to establish a connection between an access network device and a mobility management entity; and sends a second connection request message to the mobility management entity, where the second connection request message is used to request to establish a connection between the access management entity and the mobility management entity, and the mobility management entity is determined based on user access information included in the first connection request message. The access management entity receives a second connection response message, where the second connection response message indicates information about the connection between the access management entity and the mobility management entity. The access management entity sends a first connection response message to the access network device, where the first connection response message indicates information about a connection between the access network device and the access management entity. The method helps meet requirements for independent establishment, independent control, and independent evolution of access management and mobility management.

## Description

### CROSS-REFERENCE TO RELATED APPLICATIONS

This application claims priority to Chinese Patent Application No. 202210112910.3, filed with the China National Intellectual Property Administration on January 29, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a wireless communication system, an access and mobility management entity usually provides an access management function and a mobility management function. For example, the access and mobility management entity can provide access management functions such as access authentication, access authorization, and the like for a network, and can also provide mobility management functions such as a session management signaling channel and the like for a user.

However, a processing object of access management is a network access capability and focuses on a connection between a location of a terminal device and an access network (access network, AN), and a processing object of mobility management is a mobility management capability of the user and focuses on a service function of the user. In this case, capacity planning, deployment locations, and availability requirements of access management and mobility management are different. In addition, as the network continuously evolves, there is also a to-be-faced problem that when the user customizes mobility management, access and mobility management entities that meet various mobility management requirements need to be continuously deployed.

### SUMMARY

Embodiments of this application provide a communication method and apparatus, to help meet requirements for independent establishment, independent control, and independent evolution of access management and mobility management.

According to a first aspect, an embodiment of this application provides a communication method. The method includes: An access network device sends a first connection request message to an access management entity, where the first connection request message includes user access information, and is used to request to establish a connection between the access network device and a mobility management entity. The access management entity receives the first connection request message, and sends a second connection request message to the mobility management entity based on the first connection request message, where the second connection request message is used to request to establish a connection between the access management entity and the mobility management entity, and the mobility management entity is determined by the access management entity based on the user access information. The mobility management entity receives the second connection request message, and sends a second connection response message to the access management entity, where the second connection response message indicates information about the connection between the access management entity and the mobility management entity. The access management entity receives the second connection response message, and sends a first connection response message to the access network device, where the first connection response message indicates information about a connection between the access network device and the access management entity. The access network device receives the second connection response message.

According to the foregoing communication method, functions of access management and mobility management may be respectively implemented by the access management entity and the mobility management entity, and access management and mobility management can be decoupled. One access management entity may correspond to a plurality of mobility management entities of a plurality of user networks, and different user networks may no longer share a mobility management entity. This helps meet requirements for independent establishment, independent control, and independent evolution of access management and mobility management, and meet differentiated capacity planning, deployment location, and availability requirements of access management and mobility management.

In a possible design, the first connection request message further includes an access network connection identifier of the access network device, and the second connection request message includes an access management connection identifier of the access management entity; the information about the connection between the access management entity and the mobility management entity includes an association relationship between the access management connection identifier and a mobility management connection identifier of the mobility management entity; and the information about the connection between the access network device and the access management entity includes an association relationship between the access management connection identifier and the access network connection identifier.

In the foregoing design, when a terminal device accesses the user network, the connection can be established between the access network device and the access management entity by using the association relationship between the access network connection identifier and the access management connection identifier and the association relationship between the access management connection identifier and the mobility management connection identifier, so that the terminal device can be connected to the mobility management entity through the access network device, to meet a requirement for communication between the terminal device and the user network.

In a possible design, the user access information includes a user identifier and information about a user network, and that the access management entity sends a second connection request message to the mobility management entity based on the first connection request message includes: The access management entity determines, based on the user identifier and the information about the user network, that a mobility management entity that is associated with the user identifier and that supports the user network is the mobility management entity that receives the second connection request message. As an example, the access management entity may query, based on the user identifier and the information about the user network, the mobility management entity that is associated with the user identifier and that supports the user network through a user context addressing entity as the mobility management entity that receives the second connection request message.

In the foregoing design, the mobility management entity that has been connected to the terminal device and that supports the user network may be queried based on the user identifier and the information about the user network by using a user context, so that the terminal device can accurately and quickly access the required user network.

In a possible design, the user access information includes information about a user network, and that the access management entity sends a second connection request message to the mobility management entity based on the first connection request message includes: The access management entity determines, based on the information about the user network, a list of mobility management entities that support the user network. The access management entity determines one mobility management entity in the list of mobility management entities as the mobility management entity that receives the second connection request message. As an example, the access management entity may send a user network addressing request message to a user network addressing entity, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity that receives the second connection request message.

In the foregoing design, whether there is a user network that can provide a service for a user in the created user network may be queried based on the information about the user network. This helps the terminal device quickly access the required user network, and reduces resource overheads of the user network.

In a possible design, the first connection response message further indicates a connection relationship between the access network device and the mobility management entity. Specifically, in a possible implementation, the second connection request message further includes the access network connection identifier, and the first connection response message further includes an association relationship between the access network connection identifier and the mobility management connection identifier.

In the foregoing design, when the terminal device accesses the user network, the access network device and the mobility management entity can establish the connection between the access network device and the mobility management entity by using the association relationship between the access network connection identifier and the mobility management connection identifier, so that the terminal device can be connected to the mobility management entity through the access network device, to meet the requirement for communication between the terminal device and the user network.

In a possible design, the method further includes: The mobility management entity sends a first paging request message to the access management entity, where the first paging request message includes the user identifier of the terminal device and the information about the user network. The access management entity receives the first paging request message, and forwards the first paging request message to the access network device. The access network device is further configured to receive the first paging request message, and send a paging message to the terminal device, where the paging message includes the user identifier and the information about the user network. Alternatively, the method further includes: The mobility management entity sends a second paging request message to the access network device, where the second paging request message includes the user identifier of the terminal device and the information about the user network. The access network device receives the second paging message, and sends a paging message to the terminal device, where the paging message includes the user identifier and the information about the user network.

In the foregoing design, the paging request message and the paging message carry the information about the user network, for example, a user network identifier. This helps the terminal device accurately access the user network.

In a possible design, the method further includes: The access network device sends a first user request message to the access management entity, where the first user request message includes the access management connection identifier. The access management entity receives the first user request message, and sends a second user request message to the mobility management entity, where the second user request message includes the mobility management connection identifier, and the mobility management connection identifier is determined based on the association relationship between the access management connection identifier and the mobility management connection identifier. The mobility management entity receives the second user request message, and sends a second user acknowledgment message to the access management entity, where the second user acknowledgment message includes the access management connection identifier, and the access management connection identifier is determined based on the association relationship between the access management connection identifier and the mobility management connection identifier. The access management entity receives the second user acknowledgment message, and sends a first user acknowledgment message to the access network device, where the first user acknowledgment message includes the access network connection identifier, and the access network connection identifier is determined based on the association relationship between the access management connection identifier and the access network connection identifier. The access network device is further configured to receive the first user acknowledgment.

In the foregoing design, after the terminal device accesses the user network, the access network device, the access management entity, and the mobility management entity can perform communication based on the association relationship between the access network connection identifier and the access management connection identifier and the association relationship between the access management connection identifier and the mobility management connection identifier. When the terminal device has service data, the terminal device can send, to the mobility management entity through the access network device, a user request message that carries the service data, to meet the requirement for communication between the terminal device and the user network.

In a possible design, the method further includes: The mobility management entity sends a first network request message to the access management entity, where the first network request message includes the access management connection identifier, and the access management connection identifier is determined based on the association relationship between the access management connection identifier and the mobility management connection identifier. The access management entity receives the first network request message, and sends a second network request message to the access network device, where the second network request message includes the access network connection identifier, and the access network connection identifier is determined based on the association relationship between the access management connection identifier and the access network connection identifier. The access network device is further configured to receive the second network request message.

In the foregoing design, after the terminal device accesses the user network, the access network device, the access management entity, and the mobility management entity can perform communication based on the association relationship between the access network connection identifier and the access management connection identifier and the association relationship between the access management connection identifier and the mobility management connection identifier. When the user network has service data, the user network can send, to the access network device accessed by the terminal device through the mobility management entity, a network request message that carries the service data, to meet the requirement for communication between the user network and the terminal device.

According to a second aspect, an embodiment of this application provides a communication method. The method includes: An access network device sends a third connection request message to a mobility management entity, where the third connection request message is used to request to establish a connection between the access network device and the mobility management entity. The mobility management entity receives the third connection request message, and sends a third connection response message to the access network device, where the third connection response message indicates information about the connection between the access network device and the mobility management entity. Optionally, the method further includes: The access network device sends a mobility management entity addressing request message to an access management entity, where the mobility management entity addressing request message includes user access information. The access management entity receives the mobility management entity addressing request message, and sends a mobility management entity addressing response message to the access network device, where the mobility management entity addressing response message includes information about the mobility management entity, and the mobility management entity is determined by the access management entity based on the user access information. The access network device receives the mobility management entity addressing response message.

According to the foregoing communication method, functions of access management and mobility management may be respectively implemented by the access management entity and the mobility management entity, and access management and mobility management can be decoupled. One access management entity may correspond to a plurality of mobility management entities of a plurality of user networks, and different user networks may no longer share a mobility management entity. This helps meet requirements for independent establishment, independent control, and independent evolution of access management and mobility management, and meet differentiated capacity planning, deployment location, and availability requirements of access management and mobility management.

In a possible design, the third connection request message includes an access network connection identifier of the access network device, and the information about the connection between the access network device and the mobility management entity includes an association relationship between a mobility management connection identifier of the mobility management entity and the access network connection identifier.

In the foregoing design, when a terminal device accesses a user network, a connection can be established between the access network device and the access management entity by using the association relationship between the access network connection identifier and the mobility management connection identifier, so that the terminal device can be connected to the mobility management entity through the access network device, to meet a requirement for communication between the terminal device and the user network.

In a possible design, the user access information includes a user identifier and information about a user network, and that the access management entity determines the mobility management entity based on the user access information includes: The access management entity determines, based on the user identifier and the information about the user network, a mobility management entity that is associated with the user identifier and that supports the user network is the mobility management entity indicated by the information about the mobility management entity carried in the mobility management entity addressing response message. As an example, the access management entity may query, based on the user identifier and the information about the user network, the mobility management entity that is associated with the user identifier and that supports the user network through a user context addressing entity as the mobility management entity indicated by the information about the mobility management entity carried in the mobility management entity addressing response message.

In the foregoing design, the mobility management entity that has been connected to the terminal device and that supports the user network may be queried based on the user identifier and the information about the user network by using a user context, so that the terminal device can accurately and quickly access the required user network.

In a possible design, the user access information includes information about a user network, and that the access management entity determines the mobility management entity based on the user access information includes: The access management entity determines, based on the information about the user network, a list of mobility management entities that support the user network; and determines one mobility management entity in the list of mobility management entities as the mobility management entity indicated by the information about the mobility management entity carried in the mobility management entity addressing response message. As an example, the access management entity may send a user network addressing request message to a user network addressing entity, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity indicated by the information about the mobility management entity carried in the mobility management entity addressing response message.

In the foregoing design, whether there is a user network that can provide a service for a user in the created user network may be queried based on the information about the user network. This helps the terminal device quickly access the required user network, and reduces resource overheads of the user network.

In a possible design, the method further includes: The mobility management entity sends a second paging request message to the access network device, where the second paging request message includes the user identifier of the terminal device and the information about the user network. The access network device receives the second paging message, and sends a paging message to the terminal device, where the paging message includes the user identifier and the information about the user network.

In the foregoing design, the paging request message and the paging message carry the information about the user network, for example, a user network identifier. This helps the terminal device accurately access the user network.

According to a third aspect, an embodiment of this application provides a communication method. The method includes: An access management entity receives a first connection request message from an access network device, where the first connection request message includes user access information, and is used to request to establish a connection between the access network device and a mobility management entity. The access management entity sends a second connection request message to the mobility management entity based on the first connection request message, where the second connection request message is used to request to establish a connection between the access management entity and the mobility management entity, and the mobility management entity is determined by the access management entity based on the user access information. The access management entity receives a second connection response message from the mobility management entity, where the second connection response message indicates information about the connection between the access management entity and the mobility management entity. The access management entity sends a first connection response message to the access network device, where the first connection response message indicates information about a connection between the access network device and the access management entity.

In a possible design, the first connection request message further includes an access network connection identifier of the access network device, and the second connection request message includes an access management connection identifier of the access management entity; the information about the connection between the access management entity and the mobility management entity includes an association relationship between the access management connection identifier and a mobility management connection identifier of the mobility management entity; and the information about the connection between the access network device and the access management entity includes an association relationship between the access management connection identifier and the access network connection identifier.

In a possible design, the user access information includes a user identifier and information about a user network, and that the access management entity sends a second connection request message to the mobility management entity based on the first connection request message includes: The access management entity determines, based on the user identifier and the information about the user network, that a mobility management entity that is associated with the user identifier and that supports the user network is the mobility management entity that receives the second connection request message. As an example, the access management entity may query, based on the user identifier and the information about the user network, the mobility management entity that is associated with the user identifier and that supports the user network through a user context addressing entity as the mobility management entity that receives the second connection request message.

In a possible design, the user access information includes information about a user network, and that the access management entity sends a second connection request message to the mobility management entity based on the first connection request message includes: The access management entity determines, based on the information about the user network, a list of mobility management entities that support the user network. The access management entity determines one mobility management entity in the list of mobility management entities as the mobility management entity that receives the second connection request message. As an example, the access management entity may send a user network addressing request message to a user network addressing entity, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity that receives the second connection request message.

In a possible design, the first connection response message further indicates a connection relationship between the access network device and the mobility management entity. Specifically, in a possible implementation, the second connection request message further includes the access network connection identifier, and the first connection response message further includes an association relationship between the access network connection identifier and the mobility management connection identifier.

In a possible design, the method further includes: The access management entity receives a first paging request message from the mobility management entity, where the first paging request message includes the user identifier of a terminal device and the information about the user network. The access management entity forwards the first paging request message to the access network device.

In a possible design, the method further includes: The access management entity receives a first user request message from the access network device, where the first user request message includes the access management connection identifier. The access management entity sends a second user request message to the mobility management entity, where the second user request message includes the mobility management connection identifier, and the mobility management connection identifier is determined based on the association relationship between the access management connection identifier and the mobility management connection identifier. The access management entity receives a second user acknowledgment message from the mobility management entity, where the second user acknowledgment message includes the access management connection identifier. The access management entity sends a first user acknowledgment message to the access network device, where the first user acknowledgment message includes the access network connection identifier, and the access network connection identifier is determined based on the association relationship between the access management connection identifier and the access network connection identifier.

In a possible design, the method further includes: The access management entity receives a first network request message from the mobility management entity, where the first network request message includes the access management connection identifier. The access management entity sends a second network request message to the access network device, where the second network request message includes the access network connection identifier, and the access network connection identifier is determined based on the association relationship between the access management connection identifier and the access network connection identifier.

According to a fourth aspect, an embodiment of this application provides a communication method. The method includes: An access management entity receives a mobility management entity addressing request message from an access network device, where the mobility management entity addressing request message includes user access information. The access management entity sends a mobility management entity addressing response message to the access network device, where the mobility management entity addressing response message includes information about a mobility management entity, and the mobility management entity is determined by the access management entity based on the user access information.

In a possible design, the user access information includes a user identifier and information about a user network, and that the access management entity determines the mobility management entity based on the user access information includes: The access management entity determines, based on the user identifier and the information about the user network, a mobility management entity that is associated with the user identifier and that supports the user network. As an example, the access management entity may query, based on the user identifier and the information about the user network, the mobility management entity that is associated with the user identifier and that supports the user network through a user context addressing entity as the mobility management entity indicated by the information about the mobility management entity carried in the mobility management entity addressing response message.

In a possible design, the user access information includes information about a user network, and that the access management entity determines the mobility management entity based on the user access information includes: The access management entity determines, based on the information about the user network, a list of mobility management entities that support the user network; and determines one mobility management entity in the list of mobility management entities as the mobility management entity indicated by the information about the mobility management entity carried in the mobility management entity addressing response message. As an example, the access management entity may send a user network addressing request message to a user network addressing entity, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity indicated by the information about the mobility management entity carried in the mobility management entity addressing response message.

According to a fifth aspect, an embodiment of this application provides a communication method. The method includes: A mobility management entity receives a second connection request message from an access management entity, where the second connection request message is used to request to establish a connection between the access management entity and the mobility management entity. The mobility management entity sends a second connection response message to the access management entity, where the second connection response message indicates information about the connection between the access management entity and the mobility management entity.

In a possible design, the second connection request message includes an access management connection identifier of the access management entity; and the information about the connection between the access management entity and the mobility management entity includes an association relationship between the access management connection identifier and a mobility management connection identifier of the mobility management entity.

In a possible design, the method further includes: The mobility management entity sends a first paging request message to the access management entity, where the first paging request message includes a user identifier of a terminal device and information about a user network. Alternatively, the mobility management entity sends a second paging request message to an access network device, where the second paging request message includes a user identifier of a terminal device and information about a user network.

In a possible design, the method further includes: The mobility management entity receives a second user request message from the access management entity, where the second user request message includes the mobility management connection identifier. The mobility management entity sends a second user acknowledgment message to the access management entity, where the second user acknowledgment message includes the access management connection identifier, and the access management connection identifier is determined based on the association relationship between the access management connection identifier and the mobility management connection identifier.

In a possible design, the method further includes: The mobility management entity sends a first network request message to the access management entity, where the first network request message includes the access management connection identifier, and the access management connection identifier is determined based on the association relationship between the access management connection identifier and the mobility management connection identifier.

According to a sixth aspect, an embodiment of this application provides a communication method. The method includes: A mobility management entity receives a third connection request message from an access network device, where the third connection request message is used to request to establish a connection between the access network device and the mobility management entity. The mobility management entity sends a third connection response message to the access network device, where the third connection response message indicates information about the connection between the access network device and the mobility management entity.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the method further includes: The mobility management entity sends a second paging request message to the access network device, where the second paging request message includes a user identifier of a terminal device and information about a user network.

According to a seventh aspect, an embodiment of this application provides a communication method. The method includes: An access network device sends a first connection request message to an access management entity, where the first connection request message includes user access information, and is used to request to establish a connection between the access network device and a mobility management entity. The access network device receives a first connection response message from the access management entity, where the first connection response message indicates information about a connection between the access network device and the access management entity.

In a possible design, the first connection request message further includes an access network connection identifier of the access network device; and the information about the connection between the access network device and the access management entity includes an association relationship between an access management connection identifier of the access management entity and the access network connection identifier.

In a possible design, the user access information includes a user identifier and information about a user network.

In a possible design, the first connection response message further includes an association relationship between a mobility management connection identifier of the mobility management entity and the access network connection identifier, and the method further includes: The access network device records the association relationship between the mobility management connection identifier and the access network connection identifier of the access network device.

In a possible design, the access network device receives a first paging request from the access management entity, where the first paging request includes the user identifier of a terminal device and the information about the user network. The access network device sends a paging message to the terminal device, where the paging message includes the user identifier and the information about the user network. Alternatively, the access network device receives a second paging request from the mobility management entity, where the second paging request includes a user identifier of a terminal device and information about a user network. The access network device sends a paging message to the terminal device, where the paging message includes the user identifier and the information about the user network.

According to an eighth aspect, an embodiment of this application provides a communication method. The method includes: An access network device sends a third connection request message to a mobility management entity, where the third connection request message is used to request to establish a connection between the access network device and the mobility management entity. The access network device receives a third connection response message from the mobility management entity, where the third connection response message indicates information about the connection between the access network device and the mobility management entity.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the method further includes: The access network device sends a mobility management entity addressing request message to an access management entity, where the mobility management entity addressing request message includes user access information. The access network device receives a mobility management entity addressing response message from the access management entity, where the mobility management entity addressing response message includes information about the mobility management entity.

In a possible design, the user access information includes a user identifier and information about a user network.

In a possible design, the access network device receives a second paging request from the mobility management entity, where the second paging request includes a user identifier of a terminal device and information about a user network. The access network device sends a paging message to the terminal device, where the paging message includes the user identifier and the information about the user network.

According to a ninth aspect, an embodiment of this application provides a communication apparatus. The communication apparatus may be used in the communication apparatus in the third aspect. The communication apparatus may be an access management entity, or may be an apparatus (for example, a chip, a chip system, or a circuit) in the access management entity, or may be an apparatus that can be used in a matching manner with the access management entity.

In a possible implementation, the communication apparatus may include modules or units that one to one correspond to the methods/operations/steps/actions described in the third aspect. The modules or units may be hardware circuits, or may be software, or may be implemented by a hardware circuit in combination with software.

In a possible implementation, the communication apparatus may include an interface unit and a processing unit. The interface unit is configured to receive a first connection request message from an access network device, where the first connection request message includes user access information, and is used to request to establish a connection between the access network device and a mobility management entity. The processing unit is configured to send a second connection request message to the mobility management entity based on the first connection request message through the interface unit, where the second connection request message is used to request to establish a connection between an access management entity and the mobility management entity, and the mobility management entity is determined by the access management entity based on the user access information. The interface unit is further configured to: receive a second connection response message from the mobility management entity, where the second connection response message indicates information about the connection between the access management entity and the mobility management entity; and send a first connection response message to the access network device, where the first connection response message indicates information about a connection between the access network device and the access management entity.

In a possible design, the first connection request message further includes an access network connection identifier of the access network device, and the second connection request message includes an access management connection identifier of the access management entity; the information about the connection between the access management entity and the mobility management entity includes an association relationship between the access management connection identifier and a mobility management connection identifier of the mobility management entity; and the information about the connection between the access network device and the access management entity includes an association relationship between the access management connection identifier and the access network connection identifier.

In a possible design, the user access information includes a user identifier and information about a user network; and when sending the second connection request message to the mobility management entity based on the first connection request message through the interface unit, the processing unit is specifically configured to determine, based on the user identifier and the information about the user network, that a mobility management entity that is associated with the user identifier and that supports the user network is the mobility management entity that receives the second connection request message. As an example, the processing unit may query, based on the user identifier and the information about the user network, the mobility management entity that is associated with the user identifier and that supports the user network through a user context addressing entity as the mobility management entity that receives the second connection request message.

In a possible design, the user access information includes information about a user network; and when sending the second connection request message to the mobility management entity based on the first connection request message through the interface unit, the processing unit is specifically configured to: determine, based on the information about the user network, a list of mobility management entities that support the user network; and determine one mobility management entity in the list of mobility management entities as the mobility management entity that receives the second connection request message. As an example, the processing unit may send a user network addressing request message to a user network addressing entity through the interface unit, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity that receives the second connection request message.

In a possible design, the interface unit is further configured to: receive a first paging request message from the mobility management entity, where the first paging request message includes the user identifier of a terminal device and the information about the user network; and forward the first paging request message to the access network device.

In a possible design, the interface unit is further configured to: receive a first user request message from the access network device, where the first user request message includes the access management connection identifier; and send a second user request message to the mobility management entity, where the second user request message includes the mobility management connection identifier, and the mobility management connection identifier is determined by the processing unit based on the association relationship between the access management connection identifier and the mobility management connection identifier. The interface unit is further configured to: receive a second user acknowledgment message from the mobility management entity, where the second user acknowledgment message includes the access management connection identifier; and send a first user acknowledgment message to the access network device, where the first user acknowledgment message includes the access network connection identifier, and the access network connection identifier is determined by the processing unit based on the association relationship between the access management connection identifier and the access network connection identifier.

In a possible design, the interface unit is further configured to: receive a first network request message from the mobility management entity, where the first network request message includes the access management connection identifier; and send a second network request message to the access network device, where the second network request message includes the access network connection identifier, and the access network connection identifier is determined by the processing unit based on the association relationship between the access management connection identifier and the access network connection identifier.

According to a tenth aspect, an embodiment of this application provides a communication apparatus. The communication apparatus may be used in the communication apparatus in the fourth aspect. The communication apparatus may be an access management entity, or may be an apparatus (for example, a chip, a chip system, or a circuit) in the access management entity, or may be an apparatus that can be used in a matching manner with the access management entity.

In a possible implementation, the communication apparatus may include modules or units that one to one correspond to the methods/operations/steps/actions described in the fourth aspect. The modules or units may be hardware circuits, or may be software, or may be implemented by a hardware circuit in combination with software.

In a possible implementation, the communication apparatus may include an interface unit and a processing unit. The interface unit is configured to receive a mobility management entity addressing request message from an access network device, where the mobility management entity addressing request message includes user access information. The interface unit is further configured to send a mobility management entity addressing response message to the access network device, where the mobility management entity addressing response message includes information about a mobility management entity, and the mobility management entity is determined by the processing unit based on the user access information.

In a possible design, the user access information includes a user identifier and information about a user network; and when determining the mobility management entity based on the user access information, the processing unit is specifically configured to determine, based on the user identifier and the information about the user network, a mobility management entity that is associated with the user identifier and that supports the user network. As an example, the processing unit may query, based on the user identifier and the information about the user network, the mobility management entity that is associated with the user identifier and that supports the user network through a user context addressing entity as the mobility management entity indicated by the information about the mobility management entity carried in the mobility management entity addressing response message.

In a possible design, the user access information includes information about a user network; and when determining the mobility management entity based on the user access information, the processing unit is specifically configured to: determine, based on the information about the user network, a list of mobility management entities that support the user network; and determine one mobility management entity in the list of mobility management entities as the mobility management entity indicated by the information about the mobility management entity carried in the mobility management entity addressing response message. As an example, the processing unit may send a user network addressing request message to a user network addressing entity through the interface unit, where the user network addressing request message includes the information about the user network; receive a user network addressing acknowledgment message from the user network addressing entity, where the user network addressing acknowledgment message includes the list of mobility management entities that support the user network; and determine one mobility management entity in the list of mobility management entities as the mobility management entity indicated by the information about the mobility management entity carried in the mobility management entity addressing response message.

According to an eleventh aspect, an embodiment of this application provides a communication apparatus. The communication apparatus may be used in the communication apparatus in the fifth aspect. The communication apparatus may be a mobility management entity, or may be an apparatus (for example, a chip, a chip system, or a circuit) in the mobility management entity, or may be an apparatus that can be used in a matching manner with the mobility management entity.

In a possible implementation, the communication apparatus may include modules or units that one to one correspond to the methods/operations/steps/actions described in the fifth aspect. The modules or units may be hardware circuits, or may be software, or may be implemented by a hardware circuit in combination with software.

In a possible implementation, the communication apparatus may include an interface unit and a processing unit. The interface unit is configured to receive a second connection request message from an access management entity, where the second connection request message is used to request to establish a connection between the access management entity and a mobility management entity. The processing unit is configured to determine a second connection response message, where the second connection response message indicates information about the connection between the access management entity and the mobility management entity. The interface unit is further configured to send the second connection response message.

In a possible design, the second connection request message includes an access management connection identifier of the access management entity; and the information about the connection between the access management entity and the mobility management entity includes an association relationship between the access management connection identifier and a mobility management connection identifier of the mobility management entity.

In a possible design, the interface unit is further configured to: send a first paging request message to the access management entity, where the first paging request message includes a user identifier of a terminal device and information about a user network; or send a second paging request message to the access network device, where the second paging request message includes a user identifier of a terminal device and information about a user network.

In a possible design, the interface unit is further configured to: receive a second user request message from the access management entity, where the second user request message includes the mobility management connection identifier; and send a second user acknowledgment message to the access management entity, where the second user acknowledgment message includes the access management connection identifier, and the access management connection identifier is determined by the processing unit based on the association relationship between the access management connection identifier and the mobility management connection identifier.

In a possible design, the interface unit is further configured to send a first network request message to the access management entity, where the first network request message includes the access management connection identifier, and the access management connection identifier is determined by the processing unit based on the association relationship between the access management connection identifier and the mobility management connection identifier.

According to a twelfth aspect, an embodiment of this application provides a communication apparatus. The communication apparatus may be used in the communication apparatus in the sixth aspect. The communication apparatus may be a mobility management entity, or may be an apparatus (for example, a chip, a chip system, or a circuit) in the mobility management entity, or may be an apparatus that can be used in a matching manner with the mobility management entity.

In a possible implementation, the communication apparatus may include modules or units that one to one correspond to the methods/operations/steps/actions described in the sixth aspect. The modules or units may be hardware circuits, or may be software, or may be implemented by a hardware circuit in combination with software.

In a possible implementation, the communication apparatus may include an interface unit and a processing unit. The interface unit is configured to receive a third connection request message from an access network device, where the third connection request message is used to request to establish a connection between the access network device and a mobility management entity. The processing unit is configured to determine a third connection response message, where the third connection response message indicates information about the connection between the access network device and the mobility management entity. The interface unit is further configured to send the third connection response message to the access network device.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the interface unit is further configured to send a second paging request message to the access network device, where the second paging request message includes a user identifier of a terminal device and information about a user network.

According to a thirteenth aspect, an embodiment of this application provides a communication apparatus. The communication apparatus may be used in the communication apparatus in the seventh aspect. The communication apparatus may be an access network device, or may be an apparatus (for example, a chip, a chip system, or a circuit) in the access network device, or may be an apparatus that can be used in a matching manner with the access network device.

In a possible implementation, the communication apparatus may include modules or units that one to one correspond to the methods/operations/steps/actions described in the seventh aspect. The modules or units may be hardware circuits, or may be software, or may be implemented by a hardware circuit in combination with software.

In a possible implementation, the communication apparatus may include an interface unit and a processing unit. The processing unit is configured to determine a first connection request message, where the first connection request message includes user access information, and is used to request to establish a connection between an access network device and a mobility management entity. The interface unit is configured to: send the first connection request message to an access management entity; and receive a first connection response message from the access management entity, where the first connection response message indicates information about a connection between the access network device and the access management entity.

In a possible design, the first connection request message further includes an access network connection identifier of the access network device; and the information about the connection between the access network device and the access management entity includes an association relationship between an access management connection identifier of the access management entity and the access network connection identifier.

In a possible design, the user access information includes a user identifier and information about a user network.

In a possible design, the first connection response message further includes a mobility management connection identifier of the mobility management entity, and the processing unit is further configured to record an association relationship between the mobility management connection identifier and the access network connection identifier of the access network device.

In a possible design, the interface unit is further configured to receive a first paging request from the access management entity, where the first paging request includes the user identifier of a terminal device and the information about the user network. The processing unit is further configured to send a paging message to the terminal device through the interface unit, where the paging message includes the user identifier and the information about the user network. Alternatively, the interface unit is further configured to receive a second paging request from the mobility management entity, where the second paging request includes a user identifier of a terminal device and information about a user network. The processing unit is further configured to send a paging message to the terminal device through the interface unit, where the paging message includes the user identifier and the information about the user network.

According to a fourteenth aspect, an embodiment of this application provides a communication apparatus. The communication apparatus may be used in the communication apparatus in the eighth aspect. The communication apparatus may be an access network device, or may be an apparatus (for example, a chip, a chip system, or a circuit) in the access network device, or may be an apparatus that can be used in a matching manner with the access network device.

In a possible implementation, the communication apparatus may include modules or units that one to one correspond to the methods/operations/steps/actions described in the eighth aspect. The modules or units may be hardware circuits, or may be software, or may be implemented by a hardware circuit in combination with software.

In a possible implementation, the communication apparatus may include an interface unit and a processing unit. The processing unit is configured to determine a third connection request message, where the third connection request message is used to request to establish a connection between an access network device and a mobility management entity. The interface unit is configured to: send the third connection request message to the mobility management entity; and receive a third connection response message from the mobility management entity, where the third connection response message indicates information about the connection between the access network device and the mobility management entity.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the interface unit is further configured to: send a mobility management entity addressing request message to an access management entity, where the mobility management entity addressing request message includes user access information; and receive a mobility management entity addressing response message from the access management entity, where the mobility management entity addressing response message includes information about the mobility management entity.

In a possible design, the user access information includes a user identifier and information about a user network.

In a possible design, the interface unit is further configured to receive a second paging request from the mobility management entity, where the second paging request includes a user identifier of a terminal device and information about a user network. The processing unit is further configured to send a paging message to the terminal device through the interface unit, where the paging message includes the user identifier and the information about the user network.

According to a fifteenth aspect, an embodiment of this application provides a communication apparatus. The communication apparatus includes an interface circuit and a processor. The processor and the interface circuit are coupled to each other. The processor is configured to implement, through a logic circuit or by executing instructions, the method according to any one of the third aspect or the possible designs of the third aspect, or is configured to implement the method according to any one of the fourth aspect or the possible designs of the fourth aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a sixteenth aspect, an embodiment of this application provides a communication apparatus. The communication apparatus includes an interface circuit and a processor. The processor and the interface circuit are coupled to each other. The processor is configured to implement, through a logic circuit or by executing instructions, the method according to any one of the fifth aspect or the possible designs of the fifth aspect, or is configured to implement the method according to any one of the sixth aspect or the possible designs of the sixth aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a seventeenth aspect, an embodiment of this application provides a communication apparatus. The communication apparatus includes an interface circuit and a processor. The processor and the interface circuit are coupled to each other. The processor is configured to implement, through a logic circuit or by executing instructions, the method according to any one of the seventh aspect or the possible designs of the seventh aspect, or is configured to implement the method according to any one of the eighth aspect or the possible designs of the eighth aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to an eighteenth aspect, an embodiment of this application provides a computer-readable storage medium. The storage medium stores a computer program or instructions. When the computer program or the instructions is/are executed, the method according to any one of the third aspect or the possible designs of the third aspect, or the method according to any one of the fourth aspect or the possible designs of the fourth aspect, or the method according to any one of the fifth aspect or the possible designs of the fifth aspect, or the method according to any one of the sixth aspect or the possible designs of the sixth aspect, or the method according to any one of the seventh aspect or the possible designs of the seventh aspect, or the method according to any one of the eighth aspect or the possible designs of the eighth aspect may be implemented.

According to a nineteenth aspect, an embodiment of this application further provides a computer program product. The computer program product includes a computer program or instructions. When the computer program or the instructions is/are executed, the method according to any one of the third aspect or the possible designs of the third aspect, or the method according to any one of the fourth aspect or the possible designs of the fourth aspect, or the method according to any one of the fifth aspect or the possible designs of the fifth aspect, or the method according to any one of the sixth aspect or the possible designs of the sixth aspect, or the method according to any one of the seventh aspect or the possible designs of the seventh aspect, or the method according to any one of the eighth aspect or the possible designs of the eighth aspect may be implemented.

According to a twentieth aspect, an embodiment of this application further provides a chip. The chip is coupled to a memory, and is configured to read and execute a program or instructions stored in the memory, to implement the method according to any one of the third aspect or the possible designs of the third aspect, or the method according to any one of the fourth aspect or the possible designs of the fourth aspect, or the method according to any one of the fifth aspect or the possible designs of the fifth aspect, or the method according to any one of the sixth aspect or the possible designs of the sixth aspect, or the method according to any one of the seventh aspect or the possible designs of the seventh aspect, or the method according to any one of the eighth aspect or the possible designs of the eighth aspect.

According to a twenty-first aspect, an embodiment of this application further provides a communication system. The system may include the access management entity in the ninth aspect, the mobility management entity in the eleventh aspect, and the access network device in the thirteenth aspect.

In a possible implementation, the communication system may further include the user context addressing entity and the user network addressing entity in the ninth aspect, the eleventh aspect, and the thirteenth aspect.

According to a twenty-second aspect, an embodiment of this application further provides a communication system. The system includes the access management entity in the tenth aspect, the mobility management entity in the twelfth aspect, and the access network device in the fourteenth aspect.

In a possible implementation, the communication system may further include the user context addressing entity and the user network addressing entity in the tenth aspect, the twelfth aspect, and the fourteenth aspect.

According to a twenty-third aspect, an embodiment of this application further provides a core network system. The system includes the access management entity in the ninth aspect and the mobility management entity in the eleventh aspect. Optionally, the communication system may further include the user context addressing entity and the user network addressing entity in the ninth aspect and the eleventh aspect.

According to a twenty-fourth aspect, an embodiment of this application further provides a core network system. The system includes the access management entity in the tenth aspect and the mobility management entity in the twelfth aspect. Optionally, the communication system may further include the user context addressing entity and the user network addressing entity in the tenth aspect and the twelfth aspect.

For technical effect that can be achieved in the third aspect to the twenty-fourth aspect, refer to the technical effect that can be achieved in the first aspect or the second aspect. Details are not described herein again.

### BRIEF DESCRIPTION OF DRAWINGS

FIG. 1 is a diagram of a network architecture according to an embodiment of this application;
FIG. 2 is a diagram of a network architecture in which access management is decoupled from mobility management according to an embodiment of this application;
FIG. 3 is a diagram of communication in a direct mode and an indirect mode according to an embodiment of this application;
FIG. 4 is an interaction diagram 1 of a communication method according to an embodiment of this application;
FIG. 5 is a diagram of a mobility management entity determining process according to an embodiment of this application;
FIG. 6 is a diagram of mobility management entity message processing according to an embodiment of this application;
FIG. 7 is an interaction diagram 2 of a communication method according to an embodiment of this application;
FIG. 8 is a diagram of a network request initiation process on a network side according to an embodiment of this application;
FIG. 9 is an interaction diagram 3 of a communication method according to an embodiment of this application;
FIG. 10 is an interaction diagram 4 of a communication method according to an embodiment of this application;
FIG. 11 is an interaction diagram 5 of a communication method according to an embodiment of this application;
FIG. 12 is an interaction diagram 6 of a communication method according to an embodiment of this application;
FIG. 13 is an interaction diagram 7 of a communication method according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

### DESCRIPTION OF EMBODIMENTS

Technical solutions provided in embodiments of this application may be applied to a 5th generation (5th generation, 5G) network, for example, a new radio (new radio, NR) network, or may be applied to a communication system evolved after 5G, for example, a 6th generation network, or may be applied to a long term evolution (long term evolution, LTE) network, an LTE frequency division duplex (frequency division duplex, FDD) network, an LTE time division duplex (time division duplex, TDD) network, or the like.

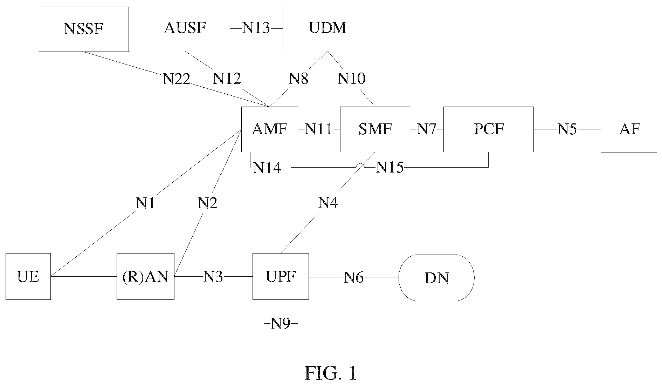

FIG. 1 is a diagram of a network architecture. In FIG. 1, user equipment (user equipment, UE) may communicate with an access and mobility management function (access and mobility management function, AMF) through an access network (radio access network, AN). The (R)AN may communicate with the AMF through an N2 interface. In addition, the (R)AN may also communicate with a user plane function (user plane function, UPF) through an N3 interface. The UPF may communicate with another UPF through an N9 interface, and the UPF may also communicate with a data network (data network, DN) through an N6 interface, and communicate with a session management function (session management function, SMF) through an N4 interface. The AMF may communicate with another AMF through an N14 interface, and the AMF may also communicate with the SMF through an N11 interface, communicate with an authentication server function (authentication server function, AUSF) through an N12 interface, communicate with a unified data management (unified data management, UDM) through an N8 interface, communicate with a policy control function (policy control function, PCF) through an N15 interface, and communicate with a network slice selection function (network slice selection function, NSSF) through an N22 interface. The SMF may communicate with the UDM through an N10 interface and communicate with the PCF through an N7 interface. The PCF may communicate with an application function (application function, AF) through an N5 interface.

Specifically, a function of the (R)AN may be implemented by an access network device, and the UPF may be implemented by a user plane entity. Similarly, the AMF may be implemented by an access and mobility management entity, the SMF may be implemented by a session management entity, the PCF may be implemented by a policy control entity, the AF may be implemented by an application entity, the NSSF may be implemented by a network slice selection entity, the AUSF may be implemented by an authentication server entity, and the UDM function may be implemented by a unified data management entity.

It may be understood that the entity or function may be a network element in a hardware device, may be a software function running on dedicated hardware, or may be a virtualized function instantiated on a platform (for example, a cloud platform). Optionally, the foregoing network element or function may be implemented by one device, or may be jointly implemented by a plurality of devices, or may be a functional module in one device. This is not specifically limited in embodiments of this application.

In a current network architecture, for example, in the network architecture shown in FIG. 1, an access and mobility management entity usually provides an access management function and a mobility management function. Specifically, the access and mobility management entity may provide one or more of the following access management functions:
termination of a RAN control plane (control plane, CP) interface (N2);
connection management (connection management);
reachability management (reachability management);
access authentication (access authentication);
access authorization (access authorization); and
provisioning of external parameters (provisioning of external parameters), for example, expected UE behavior parameters (expected UE behavior parameters) or network configuration parameters (network configuration parameters).

The access and mobility management entity may provide one or more of the following mobility management functions:
termination of a non-access stratum (non-access stratum, NAS) (N1), and NAS ciphering and integrity protection;
registration management (registration management);
mobility management (mobility management);
providing transport for session management (session management, SM) messages between UE and an SMF;
transparent proxy for routing SM messages (transparent proxy for routing SM messages);
providing transport for short message service (short message service, SMS) messages between UE and a short message service function (short message service function, SMSF);
security anchor function (security anchor function, SEAF);
location services management (location services management);
providing transport for location services messages between UE and a location management function (location management function, LMF) as well as between a RAN and an LMF;
EPS bearer ID allocation for interworking with an evolved packet system (evolved packet system, EPS);
UE mobility event notification (mobility event notification);
support for control plane cellular internet of things (cellular internet of things, CIoT) optimization; and
support for user plane CIoT optimization.

It may be learned from the foregoing that, a processing object of access management is a network access capability, and focuses on a connection between a terminal device and an access network, and a processing object of mobility management is a mobility management capability of a user, and focuses on a service function. In this case, capacity planning, deployment location, and availability requirements of access management and mobility management are different. Access management and mobility management are coupled together, and an access and mobility management entity implements a corresponding access management function and a corresponding mobility management function, which is not conducive to independent construction of access management and mobility management. In addition, access management processing of a network is controlled by an operator. In principle, mobility management processing of the user can be controlled by a served user or tenant. When the network needs to open a mobility management right to a user, it is expected that access management of the entire network is not affected, and another user is affected. In this case, access management and mobility management are coupled together, which is also not conducive to independent control of access management and mobility management. In addition, access management and mobility management have different evolution paces and manners, and coupling together is also not conducive to independent evolution of access management and mobility management. For example, an IoT network may require customized mobility management, but does not want to affect access management.

Therefore, this application proposes a communication solution, to decouple access management from mobility management, meet requirements for independent establishment, independent control, and independent evolution of access management and mobility management, and support differentiated capacity planning, deployment location, and availability requirements of access management and mobility management. The following describes in detail embodiments of this application with reference to the accompanying drawings.

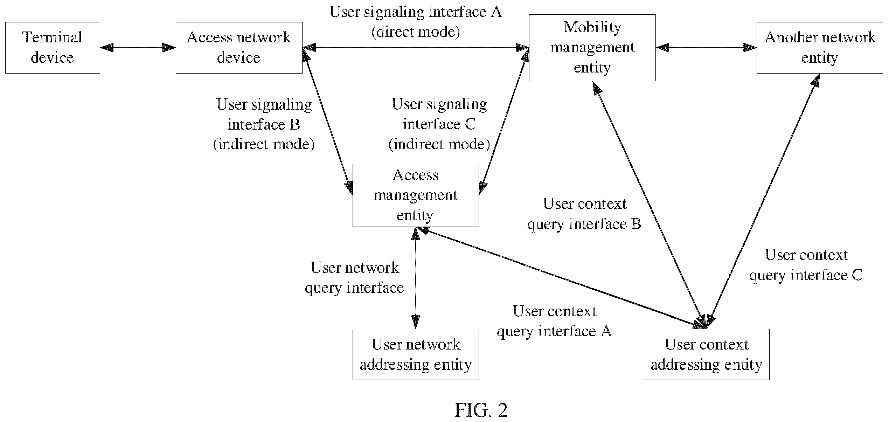

FIG. 2 is a diagram of a network architecture to which an embodiment of this application is applicable. The network architecture includes a terminal device, an access network device, an access management entity, a mobility management entity, a user network addressing entity, a user context addressing entity, and another network entity.

The access management entity has access management functions: access authentication, access authorization, and the like. As an example, the access management entity may have some or all access management functions of the access and mobility management entity. When a user initially accesses a network, the user may first access (or be connected to) the access management entity through the access network device. The access management entity may process user-related signaling, select the mobility management entity for the user, and forward a user-related message (or signaling) to the mobility management entity. After the user accesses a user network, in an indirect mode, an uplink message and a downlink message between the user and the mobility management entity are forwarded and processed by the access management entity.

The mobility management entity has mobility management functions: location services management, providing a session management signaling channel for a user, and the like. As an example, the mobility management entity may have some or all mobility management functions of the access and mobility management entity. The mobility management entity may provide a network function of a mobility management service for the user, and may maintain a user mobility management context. The context includes information such as a user network side registration state, an access network device connection state, or a location.

The user context addressing entity can provide a user context addressing function for another network entity. When a specific user-related message needs to be forwarded to the corresponding mobility management entity for processing, an identifier (identifier, ID) or address of the corresponding mobility management entity can be queried through the user context addressing entity. In some embodiments, the user context addressing entity may be integrated with a network repository entity that can implement a network function (network function, NF) repository function (NF repository function, NRF), or implement some or all functions of the user context addressing entity through the network repository entity, or implement some or all functions of the user context addressing entity through a binding support entity that can implement a binding support function (binding support function, BSF).

When the user initially accesses the user network (for example, initially registers with the user network or attaches to the user network), the user network addressing entity may provide a service for the access management entity, and may be used to query ID or address sets of a group of mobility management entities that can serve the user. In some embodiments, the user network addressing entity may also be integrated with the network repository entity, or implement some or all functions of the user network addressing entity through the network repository entity.

In addition, it should be understood that the user network addressing entity and the user context addressing entity may also be integrated with another network entity, or embedded in another network entity. For example, the user context addressing entity may be embedded in the mobility management entity, and the mobility management entity may also implement the function of the user context addressing entity.

The another network entity may include a session management entity, a policy control entity, a user plane entity, an authentication server entity, a unified data management entity, and the like, and can provide session management, a policy service, a user plane service, and the like.

The access network device may be connected to the mobility management entity through a user signaling interface A. The user signaling interface A may be used by the access network device to send an uplink message (or signaling) to the mobility management entity, and used by the mobility management entity to send a downlink message (or signaling) to the access network device.

The access management entity may be separately connected to the access network device and the mobility management entity through a user signaling interface B and a user signaling interface C. The user signaling interface B and the user signaling interface C may be used by the access network device to send an uplink message (or signaling) to the access management entity, where the access management entity forwards the uplink message (or signaling) to the mobility management entity; and used by the mobility management entity to send a downlink message (or signaling) to the access management entity, where the access management entity forwards the downlink message (or signaling) to the access network device.

The user network addressing entity may be connected to the access management entity through a user network query interface, and the access management entity may query, based on a user network identifier through the user network query interface, an ID or an address set of at least one mobility management entity that can serve the user.

The user context addressing entity may be separately connected to the access management entity, the mobility management entity, and the another network entity through a user context query interface A, a user context query interface B, and a user context query interface C. The access management entity, the mobility management entity, and the another network entity may query the ID or the address of the mobility management entity of the user network to which the user belongs through the user context query interface A, the user context query interface B, and the user context query interface C.

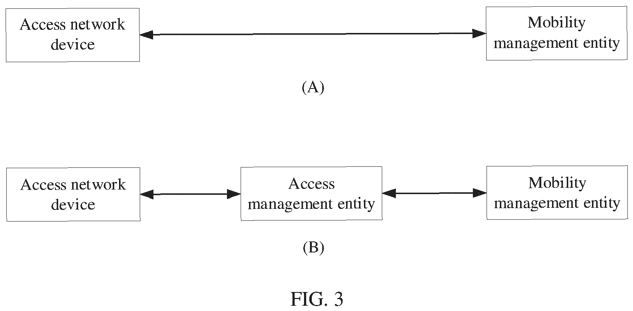

FIG. 3 is a diagram of communication in a direct mode and an indirect mode according to an embodiment of this application. As shown in A in FIG. 3, in the direct mode, when a terminal device (namely, a user) has accessed a user network and is in a state of being connected to a mobility management entity in the user network, an access network device may directly perform user-related message (or signaling) communication with the mobility management entity. For example, the access network device may directly send a user request message to the mobility management entity, the mobility management entity may also directly send a user acknowledgment message to the access network device, and the mobility management entity directly communicates with the access network device. As shown in B in FIG. 3, in the indirect mode, when a user has accessed a user network and is in a state of being connected to a mobility management entity in the user network, an access network device performs user-related message (or signaling) communication with the mobility management entity, and the user-related message (or signaling) needs to be forwarded by the access management entity, that is, the access network device performs indirect communication with the mobility management entity through the access management entity.

For ease of understanding by a person skilled in the art, the following explains and describes some terms in embodiments of this application.
(1) The user network may be a network that provides a dedicated service for one or more terminal devices (namely, users), and the user network may be a set of one or more network entities. As an example, the user network in the network shown in FIG. 1 may be a set of network entities that perform one or more functions: mobility management, session management, policy management, data forwarding, traffic statistics, quality of service (quality of service, QoS) processing, and the like. In a network in which access management and mobility management are not decoupled, the mobility management entity may alternatively be replaced with the access and mobility management entity. The user network may be a communication device entity, or may be a virtualized logical network functional entity, or may be a set including one or a group of physical machines, virtual machines, containers, processes, or other executable resources.
(2) The access network device may also be referred to as a network device or a radio access network (radio access network, RAN) device. The access network device may be a base station (base station), an evolved NodeB (evolved NodeB, eNodeB), a transmission reception point (transmitter and receiver point, TRP), an integrated access and backhaul (integrated access and backhauling, IAB) node, a next generation NodeB (next generation NodeB, gNB) in a 5th generation (5th generation, 5G) mobile communication system, a base station in a communication system evolved after 5G, for example, 6G, a home base station (for example, a home evolved NodeB or a home NodeB, HNB), an access point (access point, AP) in a wireless fidelity (wireless fidelity, Wi-Fi) system, a wireless relay node, a wireless backhaul node, a transmission point (transmitting point, TP), a mobile switching center, a device that undertakes a base station function in device-to-device (device-to-device, D2D), vehicle-to-everything (vehicle-to-everything, V2X), and machine-to-machine (machine-to-machine, M2M) communication, and the like. Alternatively, the access network device may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The network device may also be a non-terrestrial (non-terrestrial) base station, for example, a low earth orbit (low earth orbit, LEO)/very low earth orbit (very low earth orbit, VLEO) satellite or a high-altitude platform station (high-attitude platform station, HAPS).
(3) The terminal device may be a device having a wireless transceiver function. The terminal device may also be a terminal, UE, a mobile terminal, an access terminal, a subscriber unit (subscriber unit), a subscriber station, a mobile station (mobile station), a remote station, a remote terminal, a wireless communication device, a user agent, a user apparatus, or the like. The terminal device may be widely applied to various scenarios. For example, the terminal device may be a terminal in D2D, V2X communication, machine-type communication (machine-type communication, MTC), the internet of things (internet of things, IoT), virtual reality, augmented reality, industrial control, self driving, telemedicine, a smart grid, smart furniture, smart office, smart wear, smart transportation, or a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, a vehicle-mounted terminal, an IoT terminal, a wearable device, or the like. A specific technology and a specific device form used by the terminal device are not limited in embodiments of this application.
(4) A connection management (connection management, CM) state may be used to describe a signaling connection state between the terminal device and the mobility management entity. A CM idle state (CM-IDLE) indicates that no connection is established between the terminal device and the mobility management entity, and uplink and downlink messages (or signaling) between the terminal device and the mobility management entity cannot be indexed to a peer end by using a connection identifier. A CM connected state (CM-CONNECTED) indicates that a connection is established between the terminal device and the mobility management entity, and uplink and downlink messages (or signaling) between the terminal device and the mobility management entity may be indexed to the peer end by using the connection identifier.
(5) A registration management (registration management, RM) state may be used to describe whether the terminal device has been registered with the user network. An RM deregistered state (RM-DEREGISTERED) indicates that the terminal device (namely, the user) is not registered with the access management entity, and the access management entity and another network entity do not have a context of the terminal device. An RM registered state (RM-REGISTERED) indicates that the terminal device (namely, the user) is registered with the access management entity, and the access management entity and the another network entity have the context of the terminal device.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first threshold and a second threshold may be a same threshold, or may be different thresholds. In addition, this type of name does not indicate that values, corresponding parameters, priorities, importance degrees, or the like of the two thresholds are different.

In embodiments of this application, unless otherwise specified, a number of a noun indicates "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent the following: a, b, c, a and b, a and c, b and c, or a, b, and c, where a, b, and c may be singular or plural.

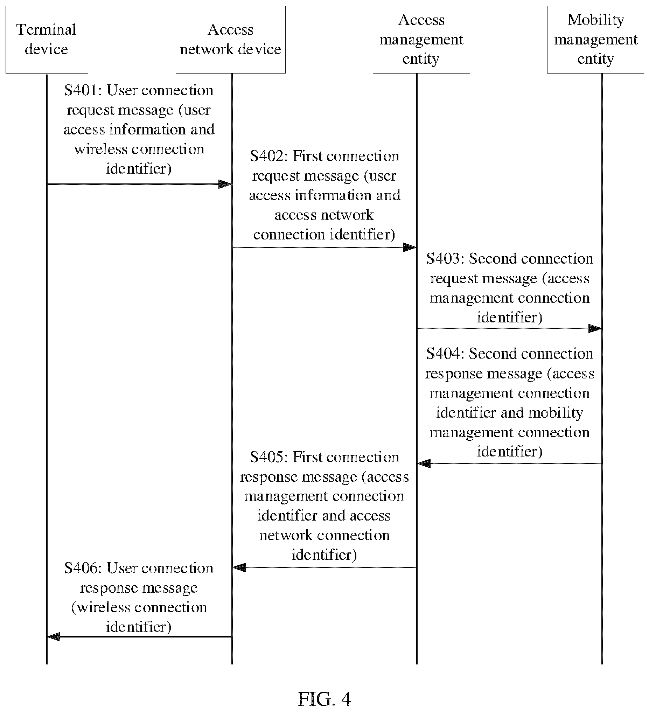

FIG. 4 is a diagram 1 of a communication method according to an embodiment of this application. The method includes the following steps.

S401: A terminal device sends a user connection request message to an access network device, where the user connection request message includes user access information; and correspondingly the access network device receives the user connection request message.

When the terminal device has service data that needs to be sent to a user network, if the terminal device does not access the user network, that is, is not connected to a mobility management entity in the user network, the terminal device needs to initiate a connection to the user network, access the user network, and be connected to the mobility management entity in the user network. Therefore, when the terminal device has the service data that needs to be sent to the user network, if the terminal device does not access the user network, the terminal device may send the user connection request message that includes the user access information to the access network device, request to access the user network, and be connected to the mobility management entity in the user network.

The user access information may include a user identifier and information about the user network. The user identifier may be a subscription permanent identifier (subscription permanent identifier, SUPI) of the terminal device, a globally unique temporary identity (globally unique temporary identity, GUTI) previously allocated by the user network to the terminal device, or the like. The information about the user network may include a user network type and/or a user network identifier (for example, a user network ID). Specifically, for the user network type, the terminal device may carry, based on user subscription information or according to a local policy, a corresponding user network type when initiating different services. For example, when initiating an IoT service, the terminal device carries an IoT network type. For the user network identifier, a user network identifier corresponding to each service may be preconfigured in the terminal device by using subscription information or the like, and a corresponding user network identifier is carried when the terminal device sends a different service.

In addition, the user connection request message may further include a wireless connection identifier (for example, a wireless connection ID) allocated by the terminal device to this service, and is used to establish a connection between the access network device and the terminal device. In some implementations, the wireless connection identifier may alternatively reuse a wireless network temporary identifier configured by the access network device for the terminal device, the user identifier of the terminal device, or the like. After receiving the user connection request message from the terminal device, the access network device may create an access network connection identifier (for example, an access network connection ID) associated with the wireless connection identifier, create an access network user context for the terminal device, and record an association relationship between the wireless connection identifier and the access network connection identifier in the access network user context. Optionally, the access network user context created for the terminal device may be associated with the user identifier of the terminal device for query.

In some implementations, the wireless connection identifier may be a connection identifier allocated by the terminal device to a service (or a connection) of the terminal device, and the terminal device and the corresponding service (or the corresponding connection) may be determined by using the wireless connection identifier. For example, the terminal device and the corresponding service (for example, a browsing service A) may be determined by using a wireless connection identifier allocated by the terminal device to the browsing service A. Similarly, the access network connection identifier may be a connection identifier allocated by the access network device to a service (or a connection) of the terminal device, and the access network device and the corresponding service (or the corresponding connection) may be determined by using the access network connection identifier. In this embodiment of this application, an access management connection identifier, a mobility management connection identifier, and the like that are subsequently related are connection identifiers allocated by an access management entity, the mobility management entity, and the like to the service (or the connection) of the terminal device, and are similar to the wireless connection identifier and the access network connection identifier. Details are not described again.

S402: The access network device sends a first connection request message to the access management entity, and correspondingly the access management entity receives the first connection request message, where the first connection request message includes the user access information, and is used to request to establish a connection between the access network device and the mobility management entity.

For the access management entity that receives the first connection request message, the access network device may perform random selection, or may perform selection according to a specific policy. As an example, the access network device may select, from one or more access management entities connected to the access network device, an access management entity with smallest load as the access management entity that receives the first connection request message. Alternatively, the access network device may select the access management entity that receives the first connection request message according to a mapping policy between the user identifier (or a part of fields in the user identifier) and the access management entity. Optionally, the mapping policy between the user identifier (or the part of fields in the user identifier) and the access management entity may come from a local configuration of the access network device, a domain name system (domain name system, DNS) configuration, or the like.

In a possible implementation, the first connection request message may further include the access network connection identifier, and is used to establish a connection between the access network device and the access management entity. After receiving the first connection request message from the access network device, the access management entity may create the access management connection identifier (for example, an access management connection ID) associated with the access network connection identifier, create an access management user context for the terminal device, and record an association relationship between the access network connection identifier and the access management connection identifier in the access management user context. Optionally, the access management user context created for the terminal device may be associated with the user identifier of the terminal device for query.

In addition, in some implementations, the access management entity may further perform message (or signaling) exchange with the terminal device and another network device, for example, an authentication server entity or a unified data management entity, to complete authentication on access of the terminal device to the user network, for example, based on the information about the user network, authenticate whether the current access management entity can serve the user network that the terminal device requests to access.

S403: The access management entity sends a second connection request message to the mobility management entity based on the first connection request message, and correspondingly the mobility management entity receives the second connection request message, where the second connection request message is used to request to establish a connection between the access management entity and the mobility management entity.

The access management entity may determine, based on the user access information, the mobility management entity that receives the second connection request message.

In a possible implementation, the user access information may include the user identifier and the information about the user network. The access management entity may query, based on the user access information through a user context addressing entity, a mobility management entity that is associated with the user identifier (that is, the terminal device has been connected to) and that supports the user network as the mobility management entity that receives the second connection request message, so that the terminal device accurately and quickly accesses the required user network.

In another possible implementation, the user access information may include the information about the user network. The access management entity may further query, based on the information about the user network through a user network addressing entity, one or more mobility management entities that support the user network, and select one mobility management entity from the queried one or more mobility management entities as the mobility management entity that receives the second connection request message, to query the user network that can provide a service for the user in the existing user network for connection.

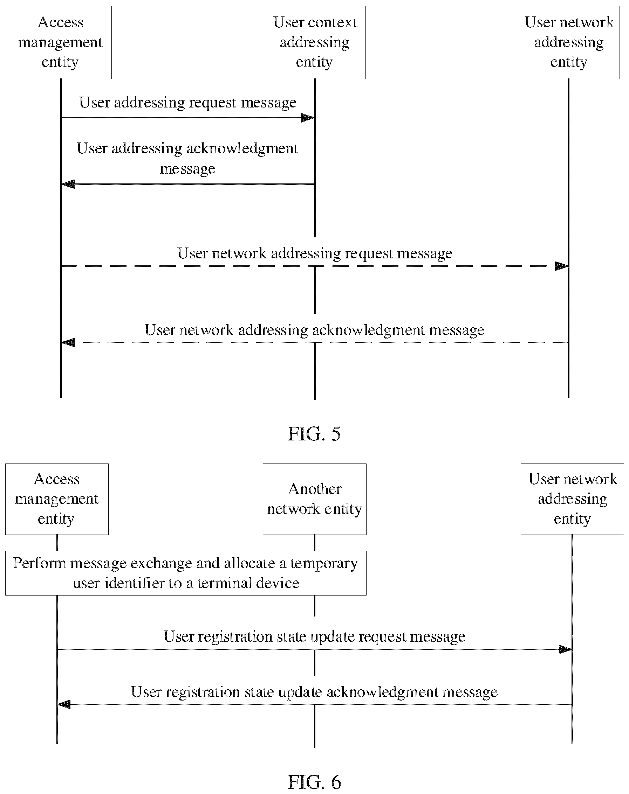

As an example, with reference to a mobility management entity determining process shown in FIG. 5, the access management entity may send, to the user context addressing entity, a user addressing request message that includes the user identifier. After receiving the user addressing request message, the user context addressing entity may query, based on the user identifier, whether the terminal device corresponding to the user identifier has been registered with the network in registration information stored by the user context addressing entity, and obtain a temporary user identifier (for example, a GUTI) allocated by the network. If the terminal device has been registered with the network, the user context addressing entity may query, based on the temporary user identifier allocated to the terminal device, a mobility management entity with which the terminal device associated with (or pointed to by) the temporary user identifier has been registered.

If the user context addressing entity obtains, through querying, the mobility management entity with which the terminal device has been registered, the user context addressing entity may send a user addressing acknowledgment message that carries information about the mobility management entity (for example, an ID or an internet protocol (Internet Protocol, IP) address of the mobility management entity) to the access management entity. If the user context addressing entity does not obtain, through querying, the mobility management entity with which the terminal device has been registered, the user context addressing entity may send, to the access management entity, a user addressing acknowledgment message that does not carry the information about the mobility management entity, that is, the information about the mobility management entity returned to the access management entity is null. In some embodiments, the user addressing acknowledgment message may further include information about a user registration state. For example, if the terminal device corresponding to the user identifier has been registered with the network, the information about the user registration state is "registered". If the terminal device corresponding to the user identifier has not been registered with the network, the information about the user registration state is "unregistered".

In a possible implementation, for the mobility management entity queried by the user context addressing entity, the access management entity may further determine, based on the information about the user network, whether the mobility management entity supports the user network that the terminal device requests to access. If the mobility management entity supports the user network that the terminal device requests to access, the access management entity determines the mobility management entity as the mobility management entity that receives the second connection request message. As an example, the information about the user network includes the user network identifier. When the queried mobility management entity supports the user network identifier, the access management entity may determine that the mobility management entity supports the user network that the terminal device requests to access.

In some embodiments, if the access management entity does not obtain, through querying, the mobility management entity through the user context addressing entity, or the queried mobility management entity does not support the user network that the terminal device requests to access, the access management entity may further send, to the user network addressing entity, a user network addressing request message that includes the information about the user network, and request the user network addressing entity to query, based on the information about the user network, the mobility management entity that can support the user network.

In a possible implementation, the information about the user network may include the user network identifier. The user network addressing entity receives the user network addressing request message that includes the information about the user network. The user network addressing entity may query the user network identifier and a list of mobility management entities that support the user network identifier that are maintained by the user network addressing entity for whether there is the user network identifier carried in the user network addressing request message. If there is the user network identifier, the user network addressing entity may send, to the access management entity by using a user network addressing acknowledgment message, the list of mobility management entities that support the user network identifier, where the list of mobility management entities may include information about at least one mobility management entity that supports the user network identifier.

In another possible implementation, the information about the user network may include the user network type. The user network addressing entity receives the user network addressing request message that includes the information about the user network. The user network addressing entity may query the user network type and a list of mobility management entities that support the user network type that are maintained by the user network addressing entity for whether there is the user network type carried in the user network addressing request message. If the user network type carried in the user network addressing request message is queried, the user network addressing entity may send, to the access management entity by using a user network addressing acknowledgment message, the list of mobility management entities that support the user network type, where the list of mobility management entities may include information about at least one mobility management entity that supports the user network type. It should be understood that the information about the queried mobility management entity may be carried in the user network addressing acknowledgment message in a form of a list, or may be carried in the user network addressing acknowledgment message in another form. This is not limited in this application.

In still another possible implementation, the information about the user network may include the user network identifier and the user network type. The user network addressing entity may first query, by using the user network identifier, a list of mobility management entities that support the user network identifier. If the list of mobility management entities that support the user network identifier is queried, the user network addressing entity sends, by using a user network addressing acknowledgment message, the list to the access management entity; or if the list of mobility management entities that support the user network identifier is not queried, the user network addressing entity may query, by using the user network type, a list of mobility management entities that support the user network type, and may send, by using a user network addressing acknowledgment message, the queried list of mobility management entities that support the user network type to the access management entity.

It should be understood that, if the user network addressing entity does not obtain, through querying, any mobility management entity based on the information about the user network, the user network addressing acknowledgment message sent to the access management entity may not carry information about any mobility management entity, that is, the list of mobility management entities that is included in the user network addressing acknowledgment message may be null. If the access management entity does not obtain, through querying, any mobility management entity, the access management entity may send access failure information to the access network device, to enable the access network device to reselect the access management entity, or notify the terminal device of an access failure. Alternatively, the access management entity may interact with a network control function, and the network control function instantiates a new mobility management entity, and returns information about the mobility management entity to the access management entity for subsequent processing, for example, as the mobility management entity that receives the second connection request message.

In some embodiments, the user network addressing acknowledgment message may further carry information about a user network identifier state and/or a user network type state. As an example, if the user network addressing request message carries the user network identifier, and the user network addressing entity obtains, through querying, the user identifier in the user network identifier and the list of mobility management entities that support the user network identifier that are maintained by the user network addressing entity, the user network identifier state is existent; otherwise, the user network identifier state is nonexistent. If the user network addressing request message carries the user network type, and the user network addressing entity obtains, through querying, the user network type in the user network type and the list of mobility management entities that support the user network type that are maintained by the user network addressing entity, the user network type state is supported; otherwise, the user network type state is nonsupported.

The access management entity may select one mobility management entity from the at least one mobility management entity queried by the user network addressing entity as the mobility management entity that receives the second connection request message. The access management entity may randomly select one mobility management entity from the at least one mobility management entity as the mobility management entity that receives the second connection request message, or may select, according to a specific policy, one mobility management entity from the at least one mobility management entity as the mobility management entity that receives the second connection request message. This is not limited in this application.

In addition, it should be understood that the access management entity may query the mobility management entity only through the user context addressing entity, or may query the mobility management entity only through the user network addressing entity. Alternatively, the access management entity may first query the mobility management entity through the user context addressing entity; and after the mobility management entity is not queried through the user context addressing entity, query the mobility management entity through the user network addressing entity. Alternatively, the access management entity first queries the mobility management entity through the user network addressing entity; and after the mobility management entity is not queried through the user network addressing entity, queries the mobility management entity through the user context addressing entity. This is not limited in this embodiment of this application.

In some embodiments, some or all functions of the user context addressing entity and the user network addressing entity may alternatively be integrated or configured in the access management entity. Operations such as querying or determining the mobility management entity implemented by the user context addressing entity and the user network addressing entity may alternatively be implemented inside the access management entity. For example, the access management entity directly determines, based on the user identifier and the information about the user network, the mobility management entity that is associated with the user identifier and that supports the user network; and determines, based on the information about the user network, information about the at least one mobility management entity that supports the user network, and the like. This is not limited in this application.

In a possible implementation, the second connection request message may further include the access management connection identifier of the access management entity, and is used to establish the connection between the access management entity and the mobility management entity. After receiving the second connection request message from the access management entity, the mobility management entity may create the mobility management connection identifier (for example, a mobility management connection ID) associated with the access management connection identifier, create a mobility management user context for the terminal device, and record an association relationship between the access management connection identifier and the mobility management connection identifier in the mobility management user context. Optionally, the mobility management user context created for the terminal device may be associated with the user identifier of the terminal device for query.

In some embodiments, as shown in FIG. 6, the mobility management entity may further perform message (or signaling) exchange with another network entity (for example, a session management entity) to allocate a temporary user identifier to the terminal device. For example, the mobility management entity may forward the second connection request message to the session management entity by using a protocol data unit (protocol data unit, PDU) session creation session management context request message that carries the second connection request message, and receive a PDU session creation session management context response message from the session management entity, where the PDU session creation session management context response message carries the temporary user identifier allocated to the terminal device.

In a possible implementation, the mobility management entity may further send a user registration state update request message to the user context addressing entity, where the user registration state update request may carry the information about the mobility management entity, the registration state (for example, registered), and user identifier information of the terminal device, and the user identifier information of the terminal device may be one or more of the SUPI of the terminal device, the temporary user identifier (for example, an allocated GUTI) allocated to the terminal device, and the like. After receiving the user registration state update request message, the user context addressing entity may update the user registration state of the terminal device, for example, update the user identifier information and the registration state of the terminal device and the information about the corresponding mobility management entity to a user registration information list stored in the user context addressing entity. In addition, after updating the user registration state of the terminal device, the user context addressing entity may further send a user registration state update acknowledgment message to the access management entity, to notify the access management entity that update of the user registration state is completed.

S404: The mobility management entity sends a second connection response message to the access management entity, and the access management entity receives the second connection response message, where the second connection response message indicates information about the connection between the access management entity and the mobility management entity.

The second connection response message may include the access management connection identifier carried in the second connection request message and the mobility management connection identifier that is created (or allocated) by the mobility management entity and that is associated with the access management connection identifier, to indicate the information about the connection between the access management entity and the mobility management entity. After receiving the second connection response message, the access management entity may store the association relationship between the access management connection identifier and the mobility management connection identifier into the access management user context.

Optionally, the second connection response message may further include the registration state (for example, registered) of the terminal device, the temporary user identifier, the user network identifier, and the like. In this way, when the terminal device accesses the user network next time, the access management entity quickly determines, based on registration information of the terminal device, the mobility management entity with which the terminal device has been registered, and the terminal device sends a message, signaling, data, or the like to the user network based on the temporary user identifier and the user network identifier, and subsequently re-accesses the user network and the like.

S405: The access management entity sends a first connection response message to the access network device, and correspondingly the access network device receives the first connection response message, where the first connection response message indicates information about the connection between the access network device and the access management entity.

The first connection response message may include the access network connection identifier carried in the first connection request message and the access management connection identifier that is created (or allocated) by the access management entity and that is associated with the access network connection identifier, to indicate the information about the connection between the access management entity and the access network device. Optionally, the first connection response message may further include the registration state (for example, registered) of the terminal device, the temporary user identifier, and the user network identifier that are in the second connection response message.

After receiving the first connection response message, the access network device may store the association relationship between the access network connection identifier and the access management connection identifier into the access network user context.

S406: The access network device sends a user connection response message to the terminal device, and correspondingly the terminal device receives the user connection response message.

The access network device may query, based on the access network connection identifier in the first connection response message, the wireless connection identifier associated with the access network connection identifier, and may send, to the terminal device based on the wireless connection identifier, the user connection response message that carries the wireless connection identifier. The user connection response message may further carry the registration state (for example, registered) of the terminal device, the temporary user identifier, and the user network identifier.

The terminal device may record information, for example, the user network identifier and the temporary user identifier, to send the message, the signaling, the data, or the like to the user network, and subsequently re-access the user network and the like.

According to the foregoing steps, an indirect-mode connection between the access network device and the mobility management entity may be established through the access management entity. The terminal device may be connected to the mobility management entity through the access network device and the access management entity, and perform message (or signaling) exchange with the mobility management entity through the access network device and the access management entity.

In some embodiments, the second connection request message may further include the access network connection identifier, and the first connection response message may further include the mobility management connection identifier. The mobility management entity may further record the association relationship between the access network connection identifier and the mobility management connection identifier in the mobility management user context stored in the mobility management entity, and the access network device may further record the association relationship between the access network connection identifier and the mobility management connection identifier in the access network user context stored in the access network device, to establish a direct-mode connection between the access network device and the mobility management device. The terminal device may further perform message (or signaling) exchange with the mobility management entity through the access network device.

According to the communication method shown in FIG. 4, the terminal device may access the corresponding user network through the access management entity for different services, and establish the connection to the mobility management entity in the corresponding user network. As an example, the terminal device may be a common internet browsing service, access a user network (for example, an enhanced mobile broadband (enhanced mobile broadband, eMBB) network) of the internet browsing service, and be connected to a mobility management entity A in the user network of the internet browsing service through the access management entity; or may be a company-specific office service, access a company-specific office user network, and be connected to a mobility management entity B in the company-specific office user network through the access management entity. It should be understood that the terminal device may be connected to the mobility management entity A and the mobility management entity B through a same access management entity or different access management entities. In the communication method in this application, different user networks may have different mobility management entities, so that a requirement of differentiated evolution that does not affect each other between users can be met.

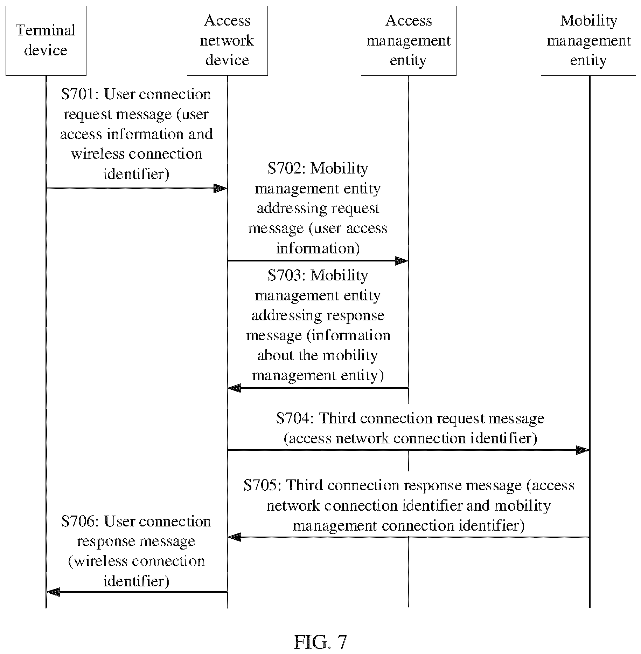

In the communication method shown in FIG. 4, from perspectives of establishing the indirect-mode connection and the direct-mode connection between the access network device and the mobility management entity through the access management entity when the terminal device requests to access the user network, how the terminal device accesses the user network and be connected to the mobility management entity in the user network is described. In some implementations, when the terminal device requests to access the user network, the direct-mode connection may alternatively be established between the access network device and the mobility management entity by using the method shown in FIG. 7. The following provides specific descriptions with reference to FIG. 7.

FIG. 7 is a diagram 2 of a communication method according to an embodiment of this application. The solution includes the following steps.

S701: A terminal device sends a user connection request message to an access network device, where the user connection request message includes user access information; and correspondingly the access network device receives the user connection request message.

For specific content, refer to S401. Details are not described herein again.

S702: The access network device sends a mobility management entity addressing request message to an access management entity, and correspondingly the access management entity receives the mobility management entity addressing request message, where the mobility management entity addressing request message includes the user access information.

For an implementation in which the access network device selects the access management entity that receives the mobility management entity addressing request message, refer to the implementation in S402. Details are not described again.

In some implementations, the access management entity may further perform message (or signaling) exchange with a terminal device and another network device, for example, an authentication server entity or a unified data management entity, to complete authentication on access of the terminal device to a user network, for example, based on information about the user network, authenticate whether the current access management entity can serve the user network that the terminal device requests to access.

S703: The access management entity sends a mobility management entity addressing response message to the access network device, and correspondingly the access network device receives the mobility management entity addressing response message, where the mobility management entity addressing response message includes information about a mobility management entity. The information about the mobility management entity may be an ID, an IP address, or the like of the mobility management entity.

The user access information includes a user identifier and the information about the user network. After receiving the mobility management entity addressing request message, the access management entity may query, based on the user access information through a user context addressing entity, a mobility management entity that is associated with the user identifier and that supports the user network; or query a mobility management entity that supports the user network through a user network addressing entity, and send information about the queried mobility management entity to the access network device by using the mobility management entity addressing response message. For an implementation of how the access management entity determines the mobility management entity based on the user access information, refer to the implementation in S403. Details are not described again.

S704: The access network device sends a third connection request message to the mobility management entity, and correspondingly the mobility management entity receives the third connection request message, where the third connection request message is used to request to establish a connection between the access network device and the mobility management entity.

The third connection request message may include an access network connection identifier, and is used to establish the connection between the access network device and the mobility management entity. After receiving the third connection request message from the access network device, the mobility management entity may create a mobility management connection identifier associated with the access network connection identifier, create a mobility management user context for the terminal device, and record an association relationship between the access network connection identifier and the mobility management connection identifier in the mobility management user context. Optionally, the mobility management user context created for the terminal device may be associated with the user identifier of the terminal device for query.

In some embodiments, as shown in FIG. 6, the mobility management entity may further perform message (or signaling) exchange with another network entity (for example, a session management entity) to allocate a temporary user identifier to the terminal device. For example, the mobility management entity may forward the third connection request message to the session management entity by using a PDU session creation session management context request message that carries the third connection request message, and receive a PDU session creation session management context response message from the session management entity, where the PDU session creation session management context response message carries the temporary user identifier allocated to the terminal device.

In a possible implementation, the mobility management entity may further send a user registration state update request message to the user context addressing entity, where the user registration state update request may carry the information about the mobility management entity, a registration state (for example, registered), and user identifier information of the terminal device. After receiving the user registration state update request message, the user context addressing entity may update the user registration state of the terminal device, for example, update the user identifier information and the registration state of the terminal device and the information about the corresponding mobility management entity to a user registration information list stored in the user context addressing entity. In addition, after updating the user registration state of the terminal device, the user context addressing entity may further send a user registration state update acknowledgment message to the access management entity, to notify the access management entity that update of the user registration state is completed.

S705: The mobility management entity sends a third connection response message to the access management entity, and correspondingly the access management entity receives the third connection response message, where the third connection response message indicates information about the connection between the access network device and the mobility management entity.

The third connection response message may include the access network connection identifier and the mobility management connection identifier that is created (or allocated) by the mobility management entity and that is associated with the access network connection identifier, to indicate the information about the connection between the access network device and the mobility management entity. Optionally, the third connection response message may further include the registration state (registered) of the terminal device, the temporary user identifier, and the user network identifier.

After receiving the third connection response message, the access network device may store the association relationship between the access network connection identifier and the mobility management connection identifier into an access network user context.

S706: The access network device sends a user connection response message to the terminal device, and correspondingly the terminal device receives the user connection response message.

The access network device may query, based on the access network connection identifier in the third connection response message, a wireless connection identifier associated with the access network connection identifier, and may send, to the terminal device based on the wireless connection identifier, the user connection response message that carries the wireless connection identifier. The user connection response message may further carry the registration state (registered) of the terminal device, the temporary user identifier, and the user network identifier.

The terminal device may record information, for example, the user network identifier and the temporary user identifier, to send a message, signaling, data, or the like to the user network, and subsequently re-access the user network and the like.

According to the foregoing steps, a direct-mode connection from the access network device to the mobility management entity may be established. The terminal device may be connected to the mobility management entity through the access network device, and perform message (or signaling) exchange with the mobility management entity through the access network device. It should be understood that, in the communication method in this application, different user networks may have different mobility management entities, so that a requirement of differentiated evolution that does not affect each other between users can be met.

The communication methods shown in FIG. 4 and FIG. 7 are mainly described from a perspective that when the terminal device has service data that needs to be sent to the user network, the terminal device actively triggers access to the user network. In some implementations, when the user network has data to be sent to the terminal device, if the terminal device and the user network are not in a connected state, the user network may also initiate paging to the terminal device, to indicate the terminal device to access the user network.

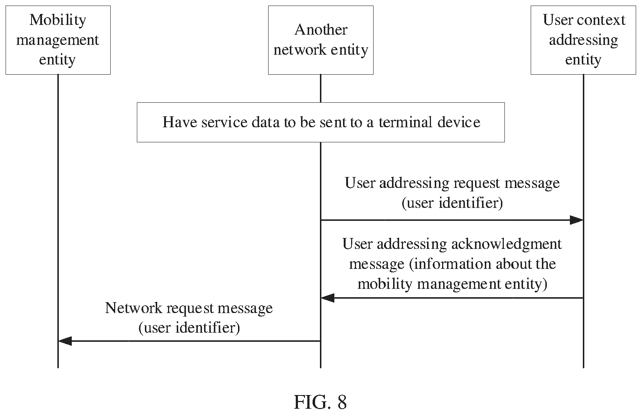

As an example, as shown in FIG. 8, when another network entity (for example, a session management entity) determines that the user network has service data to be sent to the terminal device, the another network entity may send, to the user context addressing entity, a user addressing request message that includes the user identifier of the terminal device, where the user identifier may be a subscription permanent identifier of the terminal device, for example, an SUPI, or may be a temporary user identifier previously allocated by the user network to the terminal device, for example, a GUTI, or may be an IP address or the like of the terminal device.

The user context addressing entity may obtain, through querying based on the user identifier, registration information corresponding to the terminal device, for example, the information about the mobility management entity corresponding to the terminal device (for example, a fully qualified domain name (fully qualified domain name, FQDN) or an IP address of the mobility management entity), and the registration state of the terminal device. The user context addressing entity may reply to the another network entity with a user addressing acknowledgment message that carries the information about the mobility management entity, and the user addressing acknowledgment message may further carry user registration information.

The another network entity may send, based on the information about the mobility management entity included in the user addressing acknowledgment message, a network request message that carries the user identifier of the terminal device to the corresponding mobility management entity. After receiving a user request message from the another network entity, the mobility management entity needs to initiate paging to the terminal device if there is no mobility management entity context corresponding to the terminal device.

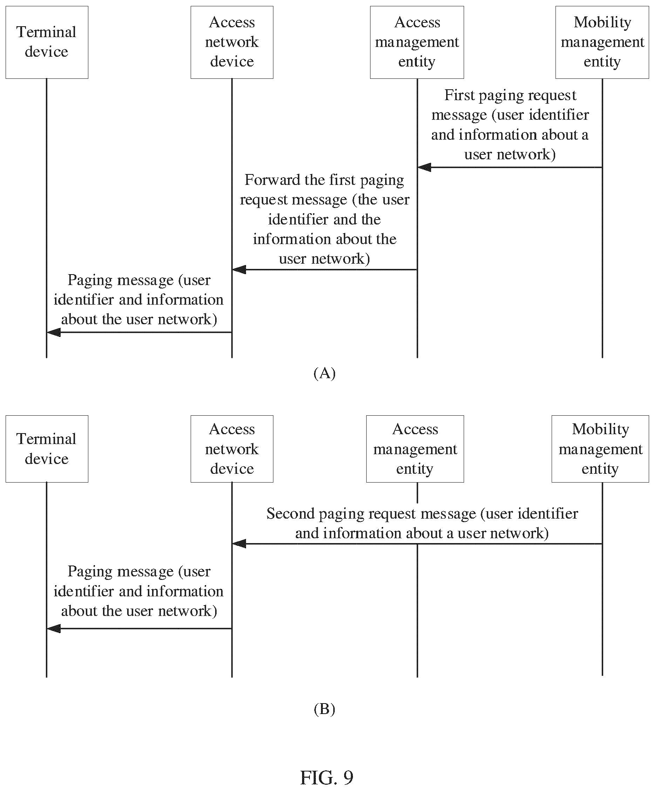

In a possible implementation, as shown in A in FIG. 9, the mobility management entity may send a first paging request message to the access management entity based on historical access information of the terminal device, for example, information about an access management entity that the terminal device has accessed and a paging policy of the mobility management entity. As an example, if the paging policy of the mobility management entity is to initiate paging to an access management entity that the terminal device has historically accessed, the mobility management entity may send the first paging request message that includes the user identifier of the terminal device and the information about the user network to all access management entities that the terminal device has accessed. Similarly, if the paging policy of the mobility management entity is to initiate paging to an access management entity within a specific range of the access management entity that the terminal device has historically accessed, the mobility management entity may send the first paging request message that includes the user identifier of the terminal device and the information about the user network to all access management entities within the specific range of the access management entity that the terminal device has accessed. If the paging policy of the mobility management entity is to initiate paging to access management entities throughout the network, the mobility management entity sends the first paging request message that includes the user identifier of the terminal device and the information about the user network to the access management entities throughout the network. Certainly, the paging policy of the mobility management entity may also be: first initiating paging to the access management entity that the terminal device has historically accessed; and if the terminal device is not paged (for example, the terminal device does not access the user network within specified duration after the first paging message is sent, and is connected to the access management entity), then initiating paging to the access management entities throughout the network.

After receiving the first paging request message, the access management entity may also forward the first paging request message to the access network device based on the historical access information of the terminal device, for example, information about an access network device that the terminal device has accessed and a paging policy of the access management entity. After receiving the first paging request message, the access network device may send, to the terminal device within coverage of the access network device, a paging message that includes the user identifier and the information about the user network, to initiate paging to the terminal device.

In still another possible implementation, as shown in B in FIG. 9, the mobility management entity may also directly send a second paging request message to the access network device based on historical access information of the terminal device, for example, information about an access network device that the terminal device has accessed and a paging policy of the mobility management entity. As an example, if the paging policy of the mobility management entity is to initiate paging to an access network device that the terminal device has historically accessed, the mobility management entity sends the second paging request message that includes the user identifier of the terminal device and the information about the user network to all access network devices that the terminal device has accessed. After receiving the second paging request message, the access network device may send, to the terminal device within coverage of the access network device, a paging message that includes the user identifier and the information about the user network, to initiate paging to the terminal device.

After receiving the paging message, the terminal device may acknowledge the paging, for example, access the user network in the manner shown in FIG. 4 and FIG. 7.

After the terminal device accesses the user network, the terminal device may perform message (or signaling) exchange with the user network to transmit the service data. When the access network device and the mobility management entity are connected in a direct mode and an indirect mode, the following describes how the terminal device and the network device perform message exchange when the terminal device initiates the user request message and the mobility management entity initiates the network request message.

Case 1: When the access network device and the mobility management entity are connected in the indirect mode, the terminal device and the network device perform a message exchange process when the terminal device initiates the user request message.

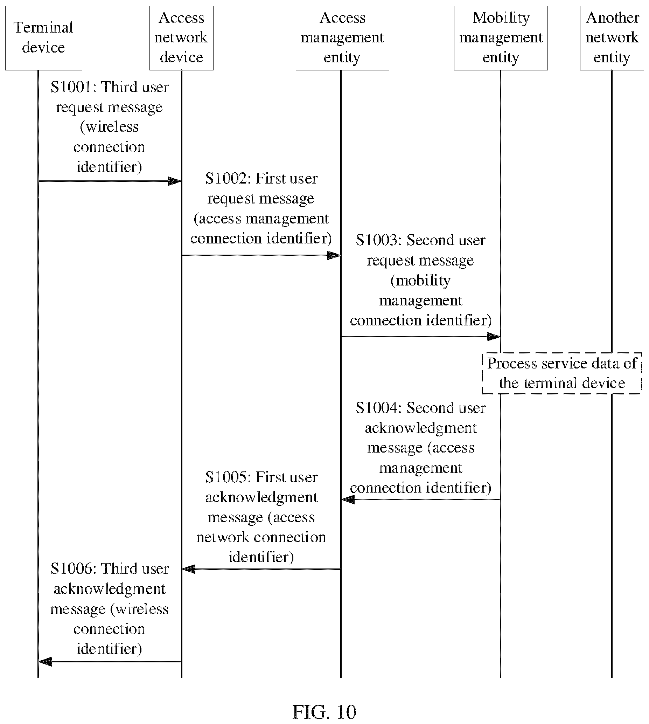

FIG. 10 is a diagram 4 of a communication method. The method includes the following steps.

S1001: A terminal device sends a third user request message to an access network device, and correspondingly the access network device receives the third user request message, where the third user request message includes a wireless connection identifier.

When the terminal device is already in a state of accessing a user network and being connected to a mobility management entity, it means that the terminal device has previously registered with a specific mobility management entity and obtains a temporary user identifier. When the terminal device has service data to be sent to the user network, the terminal device may send, to the access network device, the third user request message that includes the temporary user identifier and the service data, and include, in the third user request message, the wireless connection identifier used when the terminal device accesses the user network.

S1002: The access network device sends a first user request message to an access management entity, and correspondingly the access management entity receives the first user request message, where the first user request message includes an access management connection identifier.

In an indirect mode, after receiving the third user request message, the access network device may determine, based on the wireless connection identifier carried in the third user request message, and an association relationship between the wireless connection identifier and an access network connection identifier and an association relationship between the access network connection identifier and the access management connection identifier that are recorded by the access network device, the access network connection identifier associated with the wireless connection identifier and the access management connection identifier associated with the wireless connection identifier. The access network device may send the first user request message to the access management entity based on the access management connection identifier. The first user request message may be used to forward the third user request message.

The first user request message may include the access management connection identifier, and optionally may further include the access network connection identifier. The first user request message may carry the third user request message or carry specific data in the third user request message. As an example, the access network device may re-encapsulate a packet that carries the third user request message, and add a packet header used to send a message to the access management entity. Alternatively, the access network device may re-encapsulate a packet that carries the third user request message, and replace a packet header of the packet that carries the third user request message with a packet header used to send a message to the access management entity, to send the first user request message to the access management entity.

S1003: The access management entity sends a second user request message to the mobility management entity, and correspondingly the mobility management entity receives the second user request message, where the second user request message includes a mobility management connection identifier.

After receiving the first user request message, the access management entity may determine, based on the access management connection identifier carried in the first user request message and the association relationship, between the access management connection identifier and the mobility management connection identifier, that is recorded by the access management entity, the mobility management connection identifier associated with the access management connection identifier. The access management entity may send the second user request message to the mobility management entity based on the mobility management connection identifier. The second user request message may be used to forward the first user request message.

The second user request message includes the mobility management connection identifier, and optionally may further include the access management connection identifier.

S 1004: The mobility management entity sends a second user acknowledgment message to the access management entity, and correspondingly the access management entity receives the second user acknowledgment message, where the second user acknowledgment message includes the access management connection identifier.

After receiving the second user request message, the mobility management entity may process, based on the temporary user identifier, the service data of the terminal device carried in the second user request message with another network entity (for example, a session management entity and a user plane entity), and generate service response data.

After processing the service data of the terminal device, the mobility management entity may determine the access management connection identifier based on the mobility management connection identifier carried in the second user request message and the association relationship, between the access management connection identifier and the mobility management connection identifier, that is recorded by the mobility management entity. The mobility management entity may send the second user acknowledgment message to the access management entity based on the access management connection identifier. The second user acknowledgment message includes the access management connection identifier and the service response data, and may further include the mobility management connection identifier.

S1005: The access management entity sends a first user acknowledgment message to the access network device, and correspondingly the access network device receives the first user acknowledgment message, where the first user acknowledgment message includes the access network connection identifier.

After receiving the second user acknowledgment message, the access management entity may determine the access network connection identifier based on the access management connection identifier carried in the second user acknowledgment message and the association relationship, between the access management connection identifier and the access network connection identifier, that is recorded by the access management entity. The access management entity may send the first user acknowledgment message to the access network device based on the access network connection identifier. The first user acknowledgment message may be used to forward the second user acknowledgment message.

The first user acknowledgment message includes the access network connection identifier, and optionally may further include the access management connection identifier.

S1006: The access network device sends a third user acknowledgment message to the terminal device, and correspondingly the terminal device receives the third user acknowledgment message, where the third user acknowledgment message includes the wireless connection identifier.

After receiving the first user acknowledgment message, the access network device may determine, based on the access network connection identifier carried in the first user acknowledgment message and the association relationship, between the wireless connection identifier and the access network connection identifier, that is recorded by the access network device, the wireless connection identifier associated with the access network connection identifier. The access network device may send the third user acknowledgment message to the terminal device based on the wireless connection identifier, where the third user acknowledgment message may be used to forward the first user acknowledgment message.

Case 2: When the access network device and the mobility management entity are connected in the direct mode, the terminal device and the network device perform a message exchange process when the terminal device initiates the user request message.

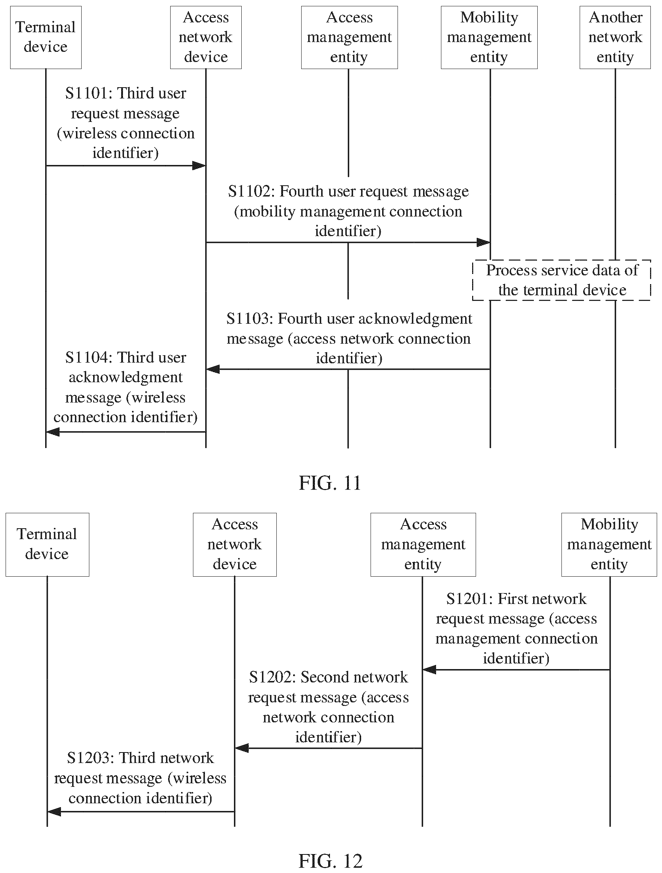

FIG. 11 is a diagram 5 of a communication method. The method includes the following steps.

S1101: A terminal device sends a third user request message to an access network device, and correspondingly the access network device receives the third user request message, where the third user request message includes a wireless connection identifier.

When the terminal device is already in a state of accessing a user network and being connected to a mobility management entity, it means that the terminal device has previously registered with a specific mobility management entity and obtains a temporary user identifier. When the terminal device has service data to be sent to the user network, the terminal device may send, to the access network device, the third user request message that includes the temporary user identifier and the service data, and include, in the third user request message, the wireless connection identifier used when the terminal device accesses the user network.

S 1102: The access network device sends a fourth user request message to the mobility management entity, and correspondingly an access management entity receives the fourth user request message, where the fourth user request message includes a mobility management connection identifier.

In a direct mode, after receiving the third user request message, the access network device may determine, based on the wireless connection identifier carried in the third user request message, and an association relationship between the wireless connection identifier and an access network connection identifier and an association relationship between the access network connection identifier and the mobility management connection identifier that are recorded by the access network device, the access network connection identifier associated with the wireless connection identifier and the mobility management connection identifier associated with the wireless connection identifier. The access network device may send the fourth user request message to the mobility management entity based on the mobility management connection identifier. The fourth user request message may be used to forward the third user request message.

The fourth user request message may include the mobility management connection identifier of the mobility management entity, and optionally may further include the access network connection identifier of the access network device. The fourth user request message may carry the third user request message or carry specific data in the third user request message.

S1103: The mobility management entity sends a fourth user acknowledgment message to the access network device, and correspondingly the access network device receives the fourth user acknowledgment message, where the fourth user acknowledgment message includes the access network connection identifier.

After receiving the fourth user request message, the mobility management entity may process, based on the temporary user identifier, the service data of the terminal device carried in the fourth user request message with another network entity (for example, a session management entity and a user plane entity), and generate service response data.

After processing the service data of the terminal device, the mobility management entity may determine the access network connection identifier based on the mobility management connection identifier carried in the fourth user request message and the association relationship, between the access network connection identifier and the mobility management connection identifier, that is recorded by the mobility management entity. The mobility management entity may send the fourth user acknowledgment message to the access network device based on the access network connection identifier. The fourth user acknowledgment message includes the access network connection identifier and the service response data, and optionally may further include the mobility management connection identifier.

S1104: The access network device sends a third user acknowledgment message to the terminal device, and correspondingly the terminal device receives the third user acknowledgment message, where the third user acknowledgment message includes the wireless connection identifier.

After receiving the fourth user acknowledgment message, the access network device may determine, based on the access network connection identifier carried in the fourth user acknowledgment message and the association relationship, between the wireless connection identifier and the access network connection identifier, that is recorded by the access network device, the wireless connection identifier associated with the access network connection identifier. The access network device may send the third user acknowledgment message to the terminal device based on the wireless connection identifier, where the third user acknowledgment message may be used to forward the fourth user acknowledgment message.

It should be understood that, after receiving the third user request message from the terminal device, the access network device sends the second user request message or the fourth user request message based on the recorded association relationship between the access network connection identifier and the access management connection identifier or the recorded association relationship between the access network connection identifier and the mobility management connection identifier, and does not perceive whether the message is sent to the access management entity (that is, connected to the mobility management entity in the indirect mode) or the mobility management entity (that is, connected to the mobility management entity in the direct mode).

Case 3: When the access network device and the mobility management entity are connected in the indirect mode, the terminal device and the network device perform a message exchange process when the mobility management entity initiates the network request message.

FIG. 12 is a diagram 6 of a communication method. The method includes the following steps.

S1201: A mobility management entity sends a first network request message to an access management entity, and correspondingly the access management entity receives the first network request message, where the first network request message includes an access management connection identifier.

As an example, as shown in FIG. 8, when another network entity (for example, a session management entity) determines that a user network has service data to be sent to a terminal device, the another network entity may send, to a user context addressing entity, a user addressing request message that includes a user identifier of the terminal device, where the user identifier may be a subscription permanent identifier of the terminal device, for example, an SUPI, or may be a temporary user identifier of the terminal device, for example, a GUTI, or may be an IP address or the like of the terminal device.

The user context addressing entity may obtain, through querying based on the user identifier, registration information corresponding to the terminal device, for example, information about the mobility management entity corresponding to the terminal device (for example, an FQDN or an IP address of the mobility management entity), and a registration state of the terminal device. The user context addressing entity may reply to the another network entity with a user addressing acknowledgment message that carries the information about the mobility management entity, and the user addressing acknowledgment message may further carry user registration information.

The another network entity may send, based on the information about the mobility management entity included in the user addressing acknowledgment message, a network request message that carries the user identifier of the terminal device and the service data to the corresponding mobility management entity. After receiving a user request message from the another network entity, the mobility management entity may determine the access management connection identifier based on a mobility management entity context corresponding to the terminal device, for example, based on an association relationship, between the access management connection identifier and a mobility management connection identifier, that is associated with the user identifier of the terminal device. The mobility management entity may send the first network request message to the access management entity based on the access management connection identifier, where the first network request message may be used to forward the user request message sent by the another network entity to the mobility management entity.

The first network request message includes the access management connection identifier, and optionally may further include the mobility management connection identifier.

S1202: The access management entity sends a second network request message to an access network device, and correspondingly the access network device receives the second network request message, where the second network request message includes an access network connection identifier.

After receiving the first network request message, the access management entity may determine the access network connection identifier based on the access management connection identifier carried in the first network request message and an association relationship, between the access management connection identifier and the access network connection identifier, that is recorded by the access management entity. The access management entity may send the second network request message to the access network device based on the access network connection identifier. The second network request message may be used to forward the first network request message.

The first network request message includes the access network connection identifier, and optionally may further include the access management connection identifier.

S1203: The access network device sends a third network request message to the terminal device, and correspondingly the terminal device receives the third network request message, where the third network request message includes a wireless connection identifier.

After receiving the second network request message, the access network device may determine, based on the access network connection identifier carried in the second network request message and an association relationship, between the wireless connection identifier and the access network connection identifier, that is recorded by the access network device, the wireless connection identifier associated with the access network connection identifier. The access network device may send the third network request message to the terminal device based on the wireless connection identifier, where the third network request message may be used to forward the second network request message.

Case 4: When the access network device and the mobility management entity are connected in the indirect mode, the terminal device and the network device perform a message exchange process when the mobility management entity initiates the network request message.

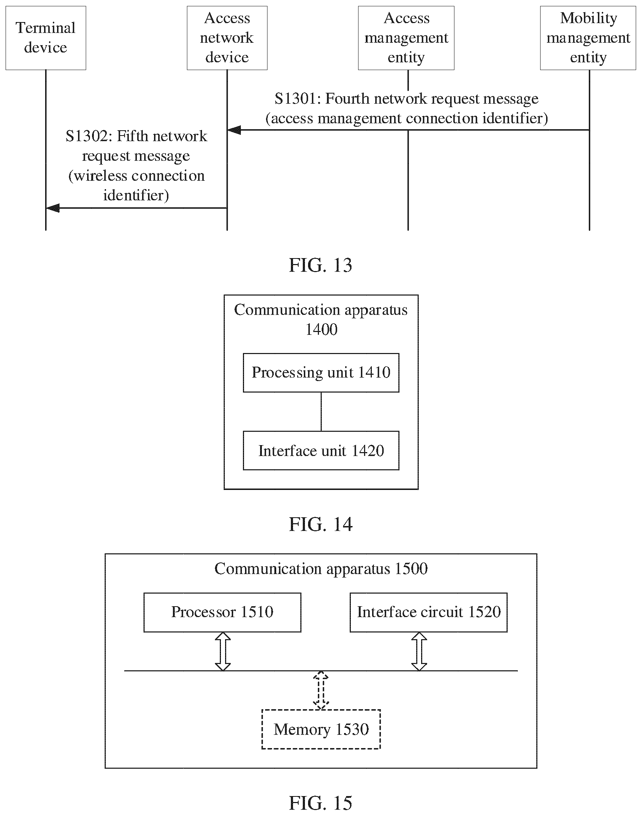

FIG. 13 is a diagram 7 of a communication method. The method includes the following steps.

S1301: A mobility management entity sends a fourth network request message to an access network device, and correspondingly the access network device receives the fourth network request message, where the fourth network request message includes an access network connection identifier.

As an example, as shown in FIG. 8, when another network entity (for example, a session management entity) determines that a user network has service data to be sent to a terminal device, the another network entity may send, to a user context addressing entity, a user addressing request message that includes a user identifier of the terminal device, where the user identifier may be a subscription permanent identifier of the terminal device, for example, an SUPI, or may be a temporary user identifier of the terminal device, for example, a GUTI, or may be an IP address or the like of the terminal device.

The user context addressing entity may obtain, through querying based on the user identifier, registration information corresponding to the terminal device, for example, information about the mobility management entity corresponding to the terminal device (for example, an FQDN or an IP address of the mobility management entity), and a registration state of the terminal device. The user context addressing entity may reply to the another network entity with a user addressing acknowledgment message that carries the information about the mobility management entity, and the user addressing acknowledgment message may further carry user registration information.

The another network entity may send, based on the information about the mobility management entity included in the user addressing acknowledgment message, a network request message that carries the user identifier of the terminal device and the service data to the corresponding mobility management entity. After receiving a user request message from the another network entity, the mobility management entity may determine the access network connection identifier based on a mobility management entity context corresponding to the terminal device, for example, based on an association relationship, between the access network connection identifier and a mobility management connection identifier, that is associated with the user identifier of the terminal device. The mobility management entity may send a fourth network request message to the access network device based on the access network connection identifier, where the fourth network request message may be used to forward the user request message sent by the another network entity to the mobility management entity.

The fourth user acknowledgment message includes the access network connection identifier, and optionally may further include the mobility management connection identifier.

S1302: The access network device sends a fifth network request message to the terminal device, and correspondingly the terminal device receives the fifth network request message, where the fifth network request message includes a wireless connection identifier.

After receiving the fourth network request message, the access network device may determine, based on the access network connection identifier carried in the fourth network request message and an association relationship, between the wireless connection identifier and the access network connection identifier, that is recorded by the access network device, the wireless connection identifier associated with the access network connection identifier. The access network device may send the fifth network request message to the terminal device based on the wireless connection identifier, where the fifth network request message may be used to forward the fourth network request message.

It may be understood that, to implement functions in the foregoing embodiments, the access network device, the access management entity, and the mobility management entity include corresponding hardware structures and/or software modules for performing the functions. A person skilled in the art should be easily aware that, with reference to units and method steps in examples described in embodiments disclosed in this application, this application can be implemented by hardware or a combination of hardware and computer software. Whether a function is performed by hardware or hardware driven by computer software depends on a particular application scenario and a design constraint of the technical solutions.

FIG. 14 and FIG. 15 are diagrams of structures of possible communication apparatuses according to embodiments of this application. These communication apparatuses may be configured to implement functions of the access network device, the access management entity, and the mobility management entity in the foregoing method embodiments, and therefore can also implement beneficial effect of the foregoing method embodiments. In a possible implementation, the communication apparatus may be the access network device shown in FIG. 2, or may be the access management entity shown in FIG. 2, or may be the mobility management entity shown in FIG. 2, or may be a module (for example, a chip) used in the access network device, the access management entity, or the mobility management entity.

As shown in FIG. 14, the communication apparatus 1400 includes a processing unit 1410 and an interface unit 1420. The interface unit 1420 may alternatively be a transceiver unit or an input/output interface. The communication apparatus 1400 may be configured to implement functions of the access network device, the access management entity, or the mobility management entity in the method embodiments shown in FIG. 4 to FIG. 13.

When the communication apparatus 1400 is configured to implement the functions of the access management entity in the method embodiments shown in FIG. 4 to FIG. 13,
the interface unit 1420 is configured to receive a first connection request message from an access network device, where the first connection request message includes user access information, and is used to request to establish a connection between the access network device and a mobility management entity; the processing unit 1410 is configured to send a second connection request message to the mobility management entity based on the first connection request message through the interface unit 1420, where the second connection request message is used to request to establish a connection between an access management entity and the mobility management entity, and the mobility management entity is determined by the access management entity based on the user access information; and the interface unit 1420 is further configured to: receive a second connection response message from the mobility management entity, where the second connection response message indicates information about the connection between the access management entity and the mobility management entity; and send a first connection response message to the access network device, where the first connection response message indicates information about a connection between the access network device and the access management entity.

In a possible design, the first connection request message further includes an access network connection identifier of the access network device, and the second connection request message includes an access management connection identifier of the access management entity; the information about the connection between the access management entity and the mobility management entity includes an association relationship between the access management connection identifier and a mobility management connection identifier of the mobility management entity; and the information about the connection between the access network device and the access management entity includes an association relationship between the access management connection identifier and the access network connection identifier.

In a possible design, the user access information includes a user identifier and information about a user network; and when sending the second connection request message to the mobility management entity based on the first connection request message through the interface unit 1420, the processing unit 1410 is specifically configured to determine, based on the user identifier and the information about the user network, that a mobility management entity that is associated with the user identifier and that supports the user network is the mobility management entity that receives the second connection request message.

In a possible design, the user access information includes information about a user network; and when sending the second connection request message to the mobility management entity based on the first connection request message through the interface unit 1420, the processing unit 1410 is specifically configured to: determine, based on the information about the user network, a list of mobility management entities that support the user network; and determine one mobility management entity in the list of mobility management entities as the mobility management entity that receives the second connection request message.

In a possible design, the second connection request message further includes the access network connection identifier, and the first connection response message further includes an association relationship between the access network connection identifier and the mobility management connection identifier.

In a possible design, the interface unit 1420 is further configured to: receive a first paging request message from the mobility management entity, where the first paging request message includes the user identifier of a terminal device and the information about the user network; and forward the first paging request message to the access network device.

In a possible design, the interface unit 1420 is further configured to: receive a first user request message from the access network device, where the first user request message includes the access management connection identifier; and send a second user request message to the mobility management entity, where the second user request message includes the mobility management connection identifier, and the mobility management connection identifier is determined by the processing unit 1410 based on the association relationship between the access management connection identifier and the mobility management connection identifier. The interface unit 1420 is further configured to: receive a second user acknowledgment message from the mobility management entity, where the second user acknowledgment message includes the access management connection identifier; and send a first user acknowledgment message to the access network device, where the first user acknowledgment message includes the access network connection identifier, and the access network connection identifier is determined by the processing unit 1410 based on the association relationship between the access management connection identifier and the access network connection identifier.

In a possible design, the interface unit 1420 is further configured to: receive a first network request message from the mobility management entity, where the first network request message includes the access management connection identifier; and send a second network request message to the access network device, where the second network request message includes the access network connection identifier, and the access network connection identifier is determined by the processing unit 1410 based on the association relationship between the access management connection identifier and the access network connection identifier.

Alternatively, the interface unit 1420 is configured to receive a mobility management entity addressing request message from an access network device, where the mobility management entity addressing request message includes user access information. The interface unit 1420 is further configured to send a mobility management entity addressing response message to the access network device, where the mobility management entity addressing response message includes information about a mobility management entity, and the mobility management entity is determined by the processing unit 1410 based on the user access information.

In a possible design, the user access information includes a user identifier and information about a user network; and when determining the mobility management entity based on the user access information, the processing unit 1410 is specifically configured to determine, based on the user identifier and the information about the user network, a mobility management entity that is associated with the user identifier and that supports the user network.

In a possible design, the user access information includes information about a user network; and when determining the mobility management entity based on the user access information, the processing unit 1410 is specifically configured to: determine, based on the information about the user network, a list of mobility management entities that support the user network; and determine one mobility management entity in the list of mobility management entities as the mobility management entity indicated by the information about the mobility management entity carried in the mobility management entity addressing response message.

When the communication apparatus 1400 is configured to implement the functions of the mobility management entity in the method embodiments shown in FIG. 4 to FIG. 13,
the interface unit 1420 is configured to receive a second connection request message from an access management entity, where the second connection request message is used to request to establish a connection between the access management entity and a mobility management entity; the processing unit 1410 is configured to determine a second connection response message, where the second connection response message indicates information about the connection between the access management entity and the mobility management entity; and the interface unit 1420 is further configured to send the second connection response message.

In a possible design, the second connection request message includes an access management connection identifier of the access management entity; and the information about the connection between the access management entity and the mobility management entity includes an association relationship between the access management connection identifier and a mobility management connection identifier of the mobility management entity.

In a possible design, the interface unit 1420 is further configured to: send a first paging request message to the access management entity, where the first paging request message includes a user identifier of a terminal device and information about a user network; or send a second paging request message to the access network device, where the second paging request message includes a user identifier of a terminal device and information about a user network.

In a possible design, the interface unit 1420 is further configured to: receive a second user request message from the access management entity, where the second user request message includes the mobility management connection identifier; and send a second user acknowledgment message to the access management entity, where the second user acknowledgment message includes the access management connection identifier, and the access management connection identifier is determined by the processing unit 1410 based on the association relationship between the access management connection identifier and the mobility management connection identifier.

In a possible design, the interface unit 1420 is further configured to send a first network request message to the access management entity, where the first network request message includes the access management connection identifier, and the access management connection identifier is determined by the processing unit 1410 based on the association relationship between the access management connection identifier and the mobility management connection identifier.

Alternatively, the interface unit 1420 is configured to receive a third connection request message from an access network device, where the third connection request message is used to request to establish a connection between the access network device and a mobility management entity. The processing unit 1410 is configured to determine a third connection response message, where the third connection response message indicates information about the connection between the access network device and the mobility management entity. The interface unit 1420 is further configured to send the third connection response message to the access network device.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the interface unit 1420 is further configured to send a second paging request message to the access network device, where the second paging request message includes a user identifier of a terminal device and information about a user network.

When the communication apparatus 1400 is configured to implement the functions of the access network device in the method embodiments shown in FIG. 4 to FIG. 13,
the processing unit 1410 is configured to determine a first connection request message, where the first connection request message includes user access information, and is used to request to establish a connection between an access network device and a mobility management entity; and the interface unit 1420 is configured to: send the first connection request message to an access management entity; and receive a first connection response message from the access management entity, where the first connection response message indicates information about a connection between the access network device and the access management entity.

In a possible design, the first connection request message further includes an access network connection identifier of the access network device; and the information about the connection between the access network device and the access management entity includes an association relationship between an access management connection identifier of the access management entity and the access network connection identifier.

In a possible design, the user access information includes a user identifier and information about a user network.

In a possible design, the first connection response message further includes a mobility management connection identifier of the mobility management entity, and the processing unit 1410 is further configured to record an association relationship between the mobility management connection identifier and the access network connection identifier of the access network device.

In a possible design, the interface unit 1420 is further configured to receive a first paging request from the access management entity, where the first paging request includes the user identifier of a terminal device and the information about the user network. The processing unit 1410 is further configured to send a paging message to the terminal device through the interface unit 1420, where the paging message includes the user identifier and the information about the user network. Alternatively, the interface unit 1420 is further configured to receive a second paging request from the mobility management entity, where the second paging request includes a user identifier of a terminal device and information about a user network. The processing unit 1410 is further configured to send a paging message to the terminal device through the interface unit 1420, where the paging message includes the user identifier and the information about the user network.

Alternatively, the processing unit 1410 is configured to determine a third connection request message, where the third connection request message is used to request to establish a connection between an access network device and a mobility management entity. The interface unit 1420 is configured to: send the third connection request message to the mobility management entity; and receive a third connection response message from the mobility management entity, where the third connection response message indicates information about the connection between the access network device and the mobility management entity.

In a possible design, the third connection request message includes an access network connection identifier of the access network device, and the information about the connection between the access network device and the mobility management entity includes an association relationship between a mobility management connection identifier of the mobility management entity and the access network connection identifier.

In a possible design, the interface unit 1420 is further configured to: send a mobility management entity addressing request message to an access management entity, where the mobility management entity addressing request message includes user access information; and receive a mobility management entity addressing response message from the access management entity, where the mobility management entity addressing response message includes information about the mobility management entity.

In a possible design, the user access information includes a user identifier and information about a user network.

In a possible design, the interface unit 1420 is further configured to receive a second paging request from the mobility management entity, where the second paging request includes a user identifier of a terminal device and information about a user network. The processing unit 1410 is further configured to send a paging message to the terminal device through the interface unit 1420, where the paging message includes the user identifier and the information about the user network.

As shown in FIG. 15, this application further provides a communication apparatus 1500. The communication apparatus 1500 includes a processor 1510 and an interface circuit 1520. The processor 1510 and the interface circuit 1520 are coupled to each other. It may be understood that the interface circuit 1520 may be a transceiver, an input/output interface, an input interface, an output interface, a communication interface, or the like. Optionally, the communication apparatus 1500 may further include a memory 1530, configured to: store instructions executed by the processor 1510, or store input data required for running instructions by the processor 1510, or store data generated after the processor 1510 runs instructions. Optionally, the memory 1530 may be integrated with the processor 1510.

When the communication apparatus 1500 is configured to implement the methods shown in FIG. 4 to FIG. 13, the processor 1510 may be configured to implement the functions of the processing unit 1410, and the interface circuit 1520 may be configured to implement the functions of the interface unit 1420.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor, any conventional processor, or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In addition, it should be understood that the term "for example" in embodiments of this application is used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

It may be understood that various numbers in embodiments of this application are merely used for distinguishing for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
receiving, by an access management entity, a first connection request message from an access network device, wherein the first connection request message comprises user access information, and is used to request to establish a connection between the access network device and a mobility management entity;
sending, by the access management entity, a second connection request message to the mobility management entity based on the first connection request message, wherein the second connection request message is used to request to establish a connection between the access management entity and the mobility management entity, and the mobility management entity is determined by the access management entity based on the user access information;
receiving, by the access management entity, a second connection response message from the mobility management entity, wherein the second connection response message indicates information about the connection between the access management entity and the mobility management entity; and
sending, by the access management entity, a first connection response message to the access network device, wherein the first connection response message indicates information about a connection between the access network device and the access management entity.

2. The method according to claim 1, wherein the first connection request message further comprises an access network connection identifier of the access network device, and the second connection request message comprises an access management connection identifier of the access management entity;
the information about the connection between the access management entity and the mobility management entity comprises an association relationship between the access management connection identifier and a mobility management connection identifier of the mobility management entity; and
the information about the connection between the access network device and the access management entity comprises an association relationship between the access management connection identifier and the access network connection identifier.

3. The method according to claim 2, wherein the user access information comprises a user identifier and information about a user network, and the sending, by the access management entity, a second connection request message to the mobility management entity based on the first connection request message comprises:
determining, by the access management entity based on the user identifier and the information about the user network, that a mobility management entity that is associated with the user identifier and that supports the user network is the mobility management entity that receives the second connection request message.

4. The method according to claim 2, wherein the user access information comprises information about a user network, and the sending, by the access management entity, a second connection request message to the mobility management entity based on the first connection request message comprises:
determining, by the access management entity based on the information about the user network, at least one mobility management entity that supports the user network; and
determining, by the access management entity, one of the at least one mobility management entity as the mobility management entity that receives the second connection request message.

5. The method according to any one of claims 2 to 4, wherein the first connection response message further comprises the mobility management connection identifier.

6. The method according to any one of claims 2 to 5, wherein the method further comprises:
receiving, by the access management entity, a first paging request message from the mobility management entity, wherein the first paging request message comprises a user identifier of a terminal device and the information about the user network; and
forwarding, by the access management entity, the first paging request message to the access network device.

7. The method according to any one of claims 2 to 6, wherein the method further comprises:
receiving, by the access management entity, a first user request message from the access network device, wherein the first user request message comprises the access management connection identifier;
sending, by the access management entity, a second user request message to the mobility management entity, wherein the second user request message comprises the mobility management connection identifier, and the mobility management connection identifier is determined based on the association relationship between the access management connection identifier and the mobility management connection identifier;
receiving, by the access management entity, a second user acknowledgment message from the mobility management entity, wherein the second user acknowledgment message comprises the access management connection identifier; and
sending, by the access management entity, a first user acknowledgment message to the access network device, wherein the first user acknowledgment message comprises the access network connection identifier, and the access network connection identifier is determined based on the association relationship between the access management connection identifier and the access network connection identifier.

8. The method according to any one of claims 2 to 7, wherein the method further comprises:
receiving, by the access management entity, a first network request message from the mobility management entity, wherein the first network request message comprises the access management connection identifier; and
sending, by the access management entity, a second network request message to the access network device, wherein the second network request message comprises the access network connection identifier, and the access network connection identifier is determined based on the association relationship between the access management connection identifier and the access network connection identifier.

9. A communication method, comprising:
receiving, by an access management entity, a mobility management entity addressing request message from an access network device, wherein the mobility management entity addressing request message comprises user access information; and
sending, by the access management entity, a mobility management entity addressing response message to the access network device, wherein the mobility management entity addressing response message comprises information about a mobility management entity, and the mobility management entity is determined by the access management entity based on the user access information.

10. The method according to claim 9, wherein the user access information comprises a user identifier and information about a user network, and the determining, by the access management entity, the mobility management entity based on the user access information comprises:
determining, by the access management entity based on the user identifier and the information about the user network, a mobility management entity that is associated with the user identifier and that supports the user network.

11. The method according to claim 9, wherein the user access information comprises information about a user network, and the determining, by the access management entity, the mobility management entity based on the user access information comprises:
determining, by the access management entity based on the information about the user network, a list of mobility management entities that support the user network; and
determining, by the access management entity, one mobility management entity in the list of mobility management entities as the mobility management entity indicated by the information about the mobility management entity carried in the mobility management entity addressing response message.

12. A communication method, comprising:
receiving, by a mobility management entity, a second connection request message from an access management entity, wherein the second connection request message is used to request to establish a connection between the access management entity and the mobility management entity; and
sending, by the mobility management entity, a second connection response message to the access management entity, wherein the second connection response message indicates information about the connection between the access management entity and the mobility management entity.

13. The method according to claim 12, wherein the second connection request message comprises an access management connection identifier of the access management entity; and
the information about the connection between the access management entity and the mobility management entity comprises an association relationship between the access management connection identifier and a mobility management connection identifier of the mobility management entity.

14. The method according to claim 13, wherein the method further comprises:
sending, by the mobility management entity, a first paging request message to the access management entity, wherein the first paging request message comprises a user identifier of a terminal device and information about a user network.

15. The method according to claim 13 or 14, wherein the method further comprises:
receiving, by the mobility management entity, a second user request message from the access management entity, wherein the second user request message comprises the mobility management connection identifier; and
sending, by the mobility management entity, a second user acknowledgment message to the access management entity, wherein the second user acknowledgment message comprises the access management connection identifier, and the access management connection identifier is determined based on the association relationship between the access management connection identifier and the mobility management connection identifier.

16. The method according to any one of claims 13 to 15, wherein the method further comprises:
sending, by the mobility management entity, a first network request message to the access management entity, wherein the first network request message comprises the access management connection identifier, and the access management connection identifier is determined based on the association relationship between the access management connection identifier and the mobility management connection identifier.

17. A communication method, comprising:
receiving, by a mobility management entity, a third connection request message from an access network device, wherein the third connection request message is used to request to establish a connection between the access network device and the mobility management entity; and
sending, by the mobility management entity, a third connection response message to the access network device, wherein the third connection response message indicates information about the connection between the access network device and the mobility management entity.

18. The method according to claim 17, wherein the third connection request message comprises an access network connection identifier of the access network device; and
the information about the connection between the access network device and the mobility management entity comprises an association relationship between a mobility management connection identifier of the mobility management entity and the access network connection identifier.

19. The method according to claim 18, wherein the method further comprises:
sending, by the mobility management entity, a second paging request message to the access network device, wherein the second paging request message comprises a user identifier of a terminal device and information about a user network.

20. A communication method, comprising:
sending, by an access network device, a first connection request message to an access management entity, wherein the first connection request message comprises user access information, and is used to request to establish a connection between the access network device and a mobility management entity; and
receiving, by the access network device, a first connection response message from the access management entity, wherein the first connection response message indicates information about a connection between the access network device and the access management entity.

21. The method according to claim 20, wherein the first connection request message further comprises an access network connection identifier of the access network device; and
the information about the connection between the access network device and the access management entity comprises an association relationship between an access management connection identifier of the access management entity and the access network connection identifier.

22. The method according to claim 21, wherein the user access information comprises a user identifier and information about a user network.

23. The method according to claim 21 or 22, wherein the first connection response message further comprises a mobility management connection identifier of the mobility management entity, and the method further comprises:
recording, by the access network device, an association relationship between the mobility management connection identifier and the access network connection identifier of the access network device.

24. The method according to claim 21 or 22, wherein the method further comprises:
receiving, by the access network device, a first paging request from the access management entity, wherein the first paging request comprises the user identifier of a terminal device and the information about the user network; and
sending, by the access network device, a paging message to the terminal device, wherein the paging message comprises the user identifier and the information about the user network.

25. The method according to claim 23, wherein the method further comprises:
receiving, by the access network device, a second paging request from the mobility management entity, wherein the second paging request comprises the user identifier of a terminal device and the information about the user network; and
sending, by the access network device, a paging message to the terminal device, wherein the paging message comprises the user identifier and the information about the user network.

26. A communication method, comprising:
sending, by an access network device, a third connection request message to a mobility management entity, wherein the third connection request message is used to request to establish a connection between the access network device and the mobility management entity; and
receiving, by the access network device, a third connection response message from the mobility management entity, wherein the third connection response message indicates information about the connection between the access network device and the mobility management entity.

27. The method according to claim 26, wherein the third connection request message comprises an access network connection identifier of the access network device; and
the information about the connection between the access network device and the mobility management entity comprises an association relationship between a mobility management connection identifier of the mobility management entity and the access network connection identifier.

28. The method according to claim 26 or 27, wherein the method further comprises:
sending, by the access network device, a mobility management entity addressing request message to an access management entity, wherein the mobility management entity addressing request message comprises user access information; and
receiving, by the access network device, a mobility management entity addressing response message from the access management entity, wherein the mobility management entity addressing response message comprises information about the mobility management entity.

29. The method according to claim 28, wherein the user access information comprises a user identifier and information about a user network.

30. The method according to claim 27, wherein the method further comprises:
receiving, by the access network device, a second paging request from the mobility management entity, wherein the second paging request comprises a user identifier of a terminal device and information about a user network; and
sending, by the access network device, a paging message to the terminal device, wherein the paging message comprises the user identifier and the information about the user network.

31. A communication apparatus, comprising an interface unit and a processing unit, wherein
the interface unit is configured to receive a first connection request message from an access network device, wherein the first connection request message comprises user access information, and is used to request to establish a connection between the access network device and a mobility management entity;
the processing unit is configured to send a second connection request message to the mobility management entity based on the first connection request message through the interface unit, wherein the second connection request message is used to request to establish a connection between an access management entity and the mobility management entity, and the mobility management entity is determined by the processing unit based on the user access information; and
the interface unit is further configured to: receive a second connection response message from the mobility management entity, wherein the second connection response message indicates information about the connection between the access management entity and the mobility management entity; and send a first connection response message to the access network device, wherein the first connection response message indicates information about a connection between the access network device and the access management entity.

32. The apparatus according to claim 31, wherein the first connection request message further comprises an access network connection identifier of the access network device, and the second connection request message comprises an access management connection identifier of the access management entity;
the information about the connection between the access management entity and the mobility management entity comprises an association relationship between the access management connection identifier and a mobility management connection identifier of the mobility management entity; and
the information about the connection between the access network device and the access management entity comprises an association relationship between the access management connection identifier and the access network connection identifier.

33. The apparatus according to claim 32, wherein the user access information comprises a user identifier and information about a user network; and when sending the second connection request message to the mobility management entity based on the first connection request message through the interface unit, the processing unit is specifically configured to determine, based on the user identifier and the information about the user network, that a mobility management entity that is associated with the user identifier and that supports the user network is the mobility management entity that receives the second connection request message.

34. The apparatus according to claim 32, wherein the user access information comprises information about a user network; and when sending the second connection request message to the mobility management entity based on the first connection request message through the interface unit, the processing unit is specifically configured to: determine, based on the information about the user network, at least one mobility management entity that supports the user network; and determine one of the at least one mobility management entity as the mobility management entity that receives the second connection request message.

35. The apparatus according to any one of claims 32 to 34, wherein the first connection response message further comprises the mobility management connection identifier.

36. The apparatus according to any one of claims 32 to 35, wherein the interface unit is further configured to: receive a first paging request message from the mobility management entity, wherein the first paging request message comprises the user identifier of a terminal device and the information about the user network; and forward the first paging request message to the access network device.

37. The apparatus according to any one of claims 32 to 36, wherein the interface unit is further configured to: receive a first user request message from the access network device, wherein the first user request message comprises the access management connection identifier; and send a second user request message to the mobility management entity, wherein the second user request message comprises the mobility management connection identifier, and the mobility management connection identifier is determined by the processing unit based on the association relationship between the access management connection identifier and the mobility management connection identifier; and
the interface unit is further configured to: receive a second user acknowledgment message from the mobility management entity, wherein the second user acknowledgment message comprises the access management connection identifier; and send a first user acknowledgment message to the access network device, wherein the first user acknowledgment message comprises the access network connection identifier, and the access network connection identifier is determined by the processing unit based on the association relationship between the access management connection identifier and the access network connection identifier.

38. The apparatus according to any one of claims 32 to 37, wherein the interface unit is further configured to: receive a first network request message from the mobility management entity, wherein the first network request message comprises the access management connection identifier; and send a second network request message to the access network device, wherein the second network request message comprises the access network connection identifier, and the access network connection identifier is determined by the processing unit based on the association relationship between the access management connection identifier and the access network connection identifier.

39. A communication apparatus, comprising an interface unit and a processing unit, wherein
the interface unit is configured to receive a mobility management entity addressing request message from an access network device, wherein the mobility management entity addressing request message comprises user access information;
the processing unit is configured to determine a mobility management entity based on the user access information; and
the interface unit is further configured to send a mobility management entity addressing response message to the access network device, wherein the mobility management entity addressing response message comprises information about the mobility management entity.

40. The apparatus according to claim 39, wherein the user access information comprises a user identifier and information about a user network; and when determining the mobility management entity based on the user access information, the processing unit is specifically configured to determine, based on the user identifier and the information about the user network, a mobility management entity that is associated with the user identifier and that supports the user network.

41. The apparatus according to claim 39, wherein the user access information comprises information about a user network; and when determining the mobility management entity based on the user access information, the processing unit is specifically configured to: determine, based on the information about the user network, a list of mobility management entities that support the user network; and determine one mobility management entity in the list of mobility management entities as the mobility management entity indicated by the information about the mobility management entity carried in the mobility management entity addressing response message.

42. A communication apparatus, comprising an interface unit and a processing unit, wherein
the interface unit is configured to receive a second connection request message from an access management entity, wherein the second connection request message is used to request to establish a connection between the access management entity and a mobility management entity;
the processing unit is configured to determine a second connection response message, wherein the second connection response message indicates information about the connection between the access management entity and the mobility management entity; and
the interface unit is further configured to send the second connection response message to the access management entity.

43. The apparatus according to claim 42, wherein the second connection request message comprises an access management connection identifier of the access management entity; and
the information about the connection between the access management entity and the mobility management entity comprises an association relationship between the access management connection identifier and a mobility management connection identifier of the mobility management entity.

44. The apparatus according to claim 43, wherein the interface unit is further configured to send a first paging request message to the access management entity, wherein the first paging request message comprises a user identifier of a terminal device and information about a user network.

45. The apparatus according to claim 43 or 44, wherein the interface unit is further configured to: receive a second user request message from the access management entity, wherein the second user request message comprises the mobility management connection identifier; and send a second user acknowledgment message to the access management entity, wherein the second user acknowledgment message comprises the access management connection identifier, and the access management connection identifier is determined by the processing unit based on the association relationship between the access management connection identifier and the mobility management connection identifier.

46. The apparatus according to any one of claims 43 to 45, wherein the interface unit is further configured to send a first network request message to the access management entity, wherein the first network request message comprises the access management connection identifier, and the access management connection identifier is determined by the processing unit based on the association relationship between the access management connection identifier and the mobility management connection identifier.

47. A communication apparatus, comprising an interface unit and a processing unit, wherein
the interface unit is configured to receive a third connection request message from an access network device, wherein the third connection request message is used to request to establish a connection between the access network device and a mobility management entity;
the processing unit is configured to determine a third connection response message, wherein the third connection response message indicates information about the connection between the access network device and the mobility management entity; and
the interface unit is further configured to send the third connection response message to the access network device.

48. The apparatus according to claim 47, wherein the third connection request message comprises an access network connection identifier of the access network device; and
the information about the connection between the access network device and the mobility management entity comprises an association relationship between a mobility management connection identifier of the mobility management entity and the access network connection identifier.

49. The apparatus according to claim 48, wherein the interface unit is further configured to send a second paging request message to the access network device, wherein the second paging request message comprises a user identifier of a terminal device and information about a user network.

50. A communication apparatus, comprising an interface unit and a processing unit, wherein
the processing unit is configured to determine a first connection request message, wherein the first connection request message comprises user access information, and is used to request to establish a connection between an access network device and a mobility management entity; and
the interface unit is configured to: send the first connection request message to an access management entity; and receive a first connection response message from the access management entity, wherein the first connection response message indicates information about a connection between the access network device and the access management entity.

51. The apparatus according to claim 50, wherein the first connection request message further comprises an access network connection identifier of the access network device; and
the information about the connection between the access network device and the access management entity comprises an association relationship between an access management connection identifier of the access management entity and the access network connection identifier.

52. The apparatus according to claim 51, wherein the user access information comprises a user identifier and information about a user network.

53. The apparatus according to claim 51 or 52, wherein the first connection response message further comprises a mobility management connection identifier of the mobility management entity, and the processing unit is further configured to record an association relationship between the mobility management connection identifier and the access network connection identifier of the access network device.

54. The apparatus according to claim 51 or 52, wherein the interface unit is further configured to receive a first paging request from the access management entity, wherein the first paging request comprises the user identifier of a terminal device and the information about the user network; and
the processing unit is further configured to send a paging message to the terminal device through the interface unit, wherein the paging message comprises the user identifier and the information about the user network.

55. The apparatus according to claim 53, wherein the interface unit is further configured to receive a second paging request from the mobility management entity, wherein the second paging request comprises the user identifier of a terminal device and the information about the user network; and
the processing unit is further configured to send a paging message to the terminal device through the interface unit, wherein the paging message comprises the user identifier and the information about the user network.

56. A communication apparatus, comprising an interface unit and a processing unit, wherein
the processing unit is configured to determine a third connection request message, wherein the third connection request message is used to request to establish a connection between an access network device and a mobility management entity; and
the interface unit is configured to: send the third connection request message to the mobility management entity; and receive a third connection response message from the mobility management entity, wherein the third connection response message indicates information about the connection between the access network device and the mobility management entity.

57. The apparatus according to claim 56, wherein the third connection request message comprises an access network connection identifier of the access network device; and
the information about the connection between the access network device and the mobility management entity comprises an association relationship between a mobility management connection identifier of the mobility management entity and the access network connection identifier.

58. The apparatus according to claim 56 or 57, wherein the interface unit is further configured to: send a mobility management entity addressing request message to an access management entity, wherein the mobility management entity addressing request message comprises user access information; and receive a mobility management entity addressing response message from the access management entity, wherein the mobility management entity addressing response message comprises information about the mobility management entity.

59. The apparatus according to claim 58, wherein the user access information comprises a user identifier and information about a user network.

60. The apparatus according to claim 57, wherein the interface unit is further configured to receive a second paging request from the mobility management entity, wherein the second paging request comprises a user identifier of a terminal device and information about a user network; and
the processing unit is further configured to send a paging message to the terminal device through the interface unit, wherein the paging message comprises the user identifier and the information about the user network.

61. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 30 through a logic circuit or by executing code instructions.

62. A computer program product, comprising instructions, wherein when the instructions are executed by a processor, the method according to any one of claims 1 to 30 is implemented.

63. A chip, wherein the chip is coupled to a memory, and is configured to read and execute a program or instructions stored in the memory, to implement the method according to any one of claims 1 to 30.

64. A computer-readable storage medium, wherein the storage medium stores a computer program or instructions; and when the computer program or the instructions is/are executed by a processor, the method according to any one of claims 1 to 30 is implemented.

65. A communication system, wherein the communication system comprises an access management entity, a mobility management entity, and an access network device;
the access management entity is configured to implement the method according to any one of claims 1 to 8;
the mobility management entity is configured to implement the method according to any one of claims 12 to 16; and
the access network device is configured to implement the method according to any one of claims 20 to 25.

66. A communication system, wherein the communication system comprises an access management entity, a mobility management entity, and an access network device;
the access management entity is configured to implement the method according to any one of claims 9 to 11;
the mobility management entity is configured to implement the method according to any one of claims 17 to 19; and
the access network device is configured to implement the method according to any one of claims 26 to 30.
